# EUROPEAN PATENT SPECIFICATION

(11) **EP 4 063 462 B1**
(45) Date of publication and mention of the grant of the patent: **23.09.2026**
(21) Application number: 22162956.1
(22) Date of filing: 18.03.2022
(51) Int. Cl.: C09D 11/40, C09D 11/322, C09D 11/38, C09D 11/54

(54) **INK SET, IMAGE FORMING METHOD, AND IMAGE FORMING APPARATUS**
TINTENSATZ, BILDERZEUGUNGSVERFAHREN UND BILDERZEUGUNGSVORRICHTUNG
JEU D'ENCRE, PROCÉDÉ DE FORMATION D'IMAGES ET APPAREIL DE FORMATION D'IMAGES

(30) Priority: 22.03.2021 JP 2021047385; 01.07.2021 JP 2021110160
(43) Date of publication of application: 28.09.2022
(73) Proprietor: Ricoh Company, Ltd., Tokyo 143-8555 (JP)
(72) Inventor: GOTOU, Hiroshi, Tokyo, 143-8555 (JP); KOBASHI, Toshiyuki, Tokyo, 143-8555 (JP); FURUKAWA, Juichi, Tokyo, 143-8555 (JP); OZAKI, Daisuke, Tokyo, 143-8555 (JP)
(74) Representative: Marks & Clerk LLP

(56) References cited:
- JP-A- 2020 012 080
- JP-A- 2020 164 571
- JP-A- 2021 021 003
- US-A1- 2019 105 919
- US-A1- 2019 134 989

## Description

### BACKGROUND

### Technical Field

The present disclosure relates to an ink set, an image forming method, and an image forming apparatus.

### Description of the Related Art

Inkjet printing is now popular for readily producing color images with low running cost. However, inkjet printing suffers producing image defects such as text blurring depending on the combination of ink and a recording medium, which greatly degrades the image quality. A technique of applying pre-processing fluid containing a cationic compound to a recording medium beforehand is known to solve this problem.

Another technique known to enhance the coloring of an image printed on a dark color recording medium to which the pre-processing fluid mentioned above is applied beforehand is to form a white background on the recording medium with white ink followed by applying color ink thereto.

A method of inkjet printing has been proposed in Unexamined Japanese Patent Application Publication No. 2008-266853 which includes applying processing fluid to at least printing regions of inkjet ink in fabric, heating the fabric to which the processing fluid is applied, printing a white ink composition for inkjet printing onto the printing region where the processing fluid has been applied, and printing a color ink composition for inkjet printing other than white.

However, color bleed is likely to occur when color ink is applied to the region of a recording medium where white ink has been applied.

JP 2021/021003 discloses an ink set including white ink and non-white ink. The white ink contains an organic solvent, water, and a color material, and the non-white ink contains a surfactant. The dynamic surface tension A of the non-white ink at 25°C and at a surface lifetime of 15 msec by the maximum bubble pressure method is 45.0 mN/m or less, and the dynamic surface tension A and the static surface tension B of the non-white ink at 25°C satisfy the following formula 2.0(%)≤[(A-B)/(A+B)]×100(%)≤10.0(%).

US 2019/105919 discloses an ink including a white ink including a hollow particle accounting for 5.0 to 25.0 percent by mass of the white ink and a non-white ink, wherein, in an infrared spectrum for a dried film of the white ink, a ratio (Y/X) of the maximum value Y in an absorption band of from 1720 to 1740 cm-1 to the maximum value X in an absorption band of from 1590 to 1610 cm-1, is from 3.0 to 6.0, wherein the non-white ink has a surface tension of from 20.0 to 30.0 mN/m at a bubble lifetime of 1500 ms.

JP 2020/164571 discloses an aqueous white ink for inkjet printing containing at least water, a pigment, a water-soluble organic solvent and a resin, in which a dynamic surface tension value at 25°C at a surface life of 10 ms of the aqueous white ink is 33 mN/m or more and 42 mN/m or less, a static surface tension value at 25°C of the aqueous white ink is 23 mN/m or more and 30 mN/or less, and the water-soluble organic solvent contains at least one alkanediol-based solvent.

US 2019/134989 discloses an ink-jet printing method including the steps of ejecting at least one ink A selected from the group consisting of a black ink and chromatic inks onto a low-liquid absorbing printing medium and then ejecting a white ink thereonto, in which the ink A contains at least one pigment selected from the group consisting of a black pigment and chromatic pigments, and a polymer dispersant containing a constitutional unit derived from a polyalkylene glycol (meth)acrylate; and the white ink contains titanium oxide and a polymer dispersant containing a constitutional unit derived from a polyalkylene glycol (meth)acrylate.

JP 2020/012080 discloses an ink set including: an aqueous coloring ink; and an aqueous coating liquid having a function to get the aqueous coloring ink coagulated, where the dynamic surface tension value of the aqueous coating liquid at 25°C in 100 ms of a surface lifetime is smaller than a dynamic surface tension value of the aqueous coloring ink at 25°C in 100 ms of a surface lifetime, the difference between a dynamic surface tension value of the aqueous coating liquid at 25°C in 100 ms of a surface lifetime and a dynamic surface tension value of the aqueous coloring ink at 25°C in 100 ms of a surface lifetime is 5 mN/m or more and 20 mN/m or less, and the dynamic surface tension value of the aqueous coating liquid at 25°C in 100 ms of a surface lifetime is in the range of 20-30 mN/m.

### SUMMARY

According to the present disclosure, an ink set is provided which minimizes the occurrence of color bleed when color ink is applied to the region of a recording medium where white ink has been applied.

An ink set in accordance with claim 1 is provided.

An image forming apparatus in accordance with claim 12 is provided.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic diagram illustrating an example of the image forming apparatus:
FIG. 2 is a schematic diagram illustrating an example of a container; and
FIG. 3 is a schematic diagram illustrating an image using an inkjet printing device.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### DESCRIPTION OF THE EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected.

For the sake of simplicity, the same reference number will be given to identical constituent elements such as parts and materials having the same functions and redundant descriptions thereof omitted unless otherwise stated.

Next, an embodiment of the present disclosure is described.

### Ink Set

The ink set of the present disclosure contains white ink, color ink and optionally pre-processing fluid. The white ink and the color ink may be one or more types of white inks. For example, the white ink may include different types of white inks having different compositions and properties.

White ink and color ink in "ink set" of the present disclosure are not necessarily integrally present. It is possible to integrally or separately manufacture or sell a container containing white ink and a container containing color ink as a set. If a white ink container and a color ink container are independently manufactured or sold but the white ink and the color ink are used or substantially used in combination, the white ink and the color ink constitute the set mentioned above.

"White ink" in the present disclosure is a liquid composition for forming a white image by applying it to a recording medium. When pre-processing fluid is used, the white ink is a liquid composition for forming a white image by applying it to the region of a recording medium where the pre-processing fluid has been applied. A white image formed with the white ink on a recording medium serves as a background of a color image formed with the color ink to be applied to the region where the white ink has been applied, which enhances the coloring of the color image. In the present disclosure, "white" is a color referred to as white appropriately accepted under normal social conventions and includes slightly colored white.

"Color ink" is a liquid composition for forming a color image by applying to the region of a recording medium where white ink has been applied. "Color" represents colors excluding "white" mentioned above and includes black, cyan, magenta, and yellow.

"Pre-processing fluid" in the present disclosure is applied to a recording medium and aggregates or thickens white ink or color ink applied later to the pre-processing fluid applied region.

The difference in static surface tension between the white ink and the color ink in an ink set is 1.0 mN/m or less, preferably 0.8 mN/m or less, more preferably 0.6 mN/m or less, and furthermore preferably 0.5 mN/m or less at 25 degrees C. The difference in static surface tension is represented in the absolute value and the minimum is 0 mN/m. **In** the case of two or more types of white inks or two or more types of color inks, a predetermined combination of the white inks and the color inks satisfies the difference mentioned above. It is preferable to satisfy the difference in static surface tension in any combination of the white inks and the color inks.

The difference in dynamic surface tension between the white ink and the color ink at each bubble life time of 15 msec, 150 msec, and 1,500 msec at 25 degrees C is 1.0 mN/m or less and preferably 0.9 mN/m or less as measured by maximum bubble pressure technique. The difference in dynamic surface tension is represented in the absolute value and the minimum is 0 mN/m. **In** the case of two or more types of white inks or two or more types of color inks, a predetermined combination of the white ink and the color ink satisfies the difference mentioned above. It is preferable to satisfy the difference in any combination of the white inks and the color inks. The difference in dynamic surface tension at each bubble life time can be the same or difference as long as it is 1.0 mN/m or less.

The ink set satisfying the difference in static surface tension and dynamic surface tension minimizes the occurrence of color bleed when the white ink is applied to a recording medium and the color ink is applied to the region of white ink in the recording medium.

The reason why color bleed is minimized by the ink set is described below.

Generally, the coloring of a color image printed on a dark color recording medium is enhanced by a white image formed as a background with white ink between the color image and the recording medium. However, if color ink is applied shortly, for example, within 20 seconds, after the application of white ink, if a large quantity of white ink is applied, if a recording medium has a little or no absorbency, or if a recording medium to which white ink is applied is not heated by a heating device before color ink is applied, color bleed of the white ink mixed with the color ink is likely to occur attributable to the wet white ink, not sufficiently dried white ink. This wet white ink prevents the color ink applied later to the white ink region from drying, causing beading, which is non-uniform density in a color image.

To the contrary, an ink set of white ink and color ink having the above-mentioned relationships regarding static surface tension and dynamic surface tension minimizes the occurrence of color bleed even if the white ink is not dried well.

If one or more types of color inks are applied onto such wet white ink, color bleed occurs between the color inks on the white ink region in addition to the color bleed between the white ink and each color ink.

The difference in dynamic surface tension between any combination of the color inks at a bubble life time of 15 msec at 25 degrees Cis 1.0 mN/m or less and preferably 0.9 mN/m or less as measured by maximum bubble pressure technique. Color bleed between the color inks can be minimized by satisfying the difference in dynamic surface tensions between the color inks. The difference in dynamic surface tension is represented in the absolute value and the minimum is 0 mN/m. The difference in dynamic surface tensions between all combinations of color inks preferably satisfies the relationship mentioned above. For example, in the case of black, ink, cyan ink, magenta ink, and yellow ink, it is preferable that the difference in dynamic surface tension between black ink and cyan ink, black ink and yellow ink, black ink and yellow ink, cyan ink and magenta ink, cyan ink and yellow ink, and magenta ink and yellow ink satisfy the relationship. The difference in the dynamic surface tension between any combination of color inks can be the same or different as long as it is 1.0 mN/m or less.

The dynamic surface tension of each ink of black ink, cyan ink, magenta ink, and yellow ink satisfies the following relationships (1) and (2): $Dsb > Dsc \geq Dsm \geq Dsy$ $Dsb - Dsy \leq 1.0 mN / m$ where Dsb, Dsc, Dsm, and Dsy respectively represent a dynamic surface tension of the black ink, a dynamic surface tension of the cyan ink, a dynamic surface tension of the magenta ink, and a dynamic surface tension of the yellow ink at a bubble life time of 15 msec at 25 degrees C as measured by maximum bubble pressure technique. Black ink, cyan ink, magenta ink, and yellow ink have a larger impact in this order on the other ink region regarding visual effects when color bleed occurs. If the Relationship (1) is satisfied, color bleed of the ink of a higher order invading into the ink of a lower order is minimized.

Each of the static surface tension of the white ink and the color ink in an ink set is preferably 40.0 mN/m or less, more preferably 36.0 mN/m or less, and furthermore preferably 30.0 mN/m or less at 25 degrees C. As long as the static surface tension of white ink and one or more types of color inks are within the range specified above, beading between the white ink and each color ink and between the different color inks is minimized. In the case of two or more types of white inks and two or more types of color inks, a predetermined combination of the white ink and the color ink satisfies the static surface tension mentioned above. It is preferable to satisfy the static surface tension in any combination of the white inks and the color inks. As long as the static surface tension of white inks and color inks is 40.0 mN/m or less, it can be the same or different.

### White Ink and Color Ink

The white ink and color ink contain an organic solvent, water, coloring material, resin, surfactant, and optionally other components to suit to a particular application. If pre-processing fluid is used, ink contains at least one anionic coloring material or resin, which is also referred to as an anionic compound. If white ink or color ink contains at least one anionic compound, the white ink or color ink agglomerates or becomes sticky upon contact with a component such as a flocculant contained in pre-processing fluid. The white ink or color ink therefore stays on the surface of a recording medium.

### Organic Solvent

The organic solvent is not particularly limited. It preferably has an equilibrium moisture content of 30 percent by mass or more in an environment of 23 degrees C and a relative humidity of 80 percent, which is also referred to as a humectant. The higher the equilibrium moisture content and the boiling point, the more preferable. The selection of organic solvents relates to reducing color bleed and beading, in other words, controlling static surface tension and dynamic surface tension. It also relates to enhancing the discharging stability of ink and reducing the fixation of waste ink in the maintenance mechanism of an image forming apparatus.

The equilibrium moisture content is calculated utilizing the following relationship.

Specifically, a petri dish on which one gram of each organic solvent is placed is preserved in a desiccator in which the temperature and the relative humidity are respectively maintained at 23 ± 1 degrees C and 80 ± 3 percent RH to measure the equilibrium moisture content, using a saturated aqueous solution of potassium chloride and sodium chloride. 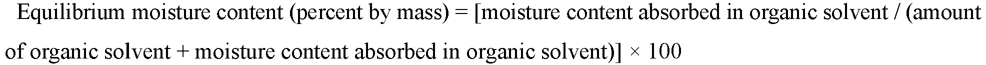 Equilibrium moisture content (percent by mass) = [moisture content absorbed in organic solvent / (amount of organic solvent + moisture content absorbed in organic solvent)] × 100

One of the humectants is a polyol having an equilibrium moisture content of 30 percent by mass or more in an environment of 23 degrees C and a relative humidity of 80 percent. Specific examples of the polyol include, but are not limited to, diethylene glycol (bp of 245 degrees C, equilibrium moisture content of 43 percent by mass), triethylene glycol (bp of 285 degrees C, equilibrium moisture content of 39 percent by mass), tetraethylene glycol (bp of from 324 to 330 degrees C, equilibrium moisture content of 37 percent by mass), 1,3-butane diol (bp of from 203 to 204 degrees C, equilibrium moisture content of 35 percent by mass), glycerin (bp of 290 degrees C, equilibrium moisture content of 49 percent by mass), diglycerin (bp of 270 degrees C/20 hPa, equilibrium moisture content of 38 percent by mass), 1,2,3-butanetriol (bp of 175 degrees C/33 hPa, equilibrium moisture content of 38 percent by mass), and 1,2,4-butanetriol (bp of from 190 to 191 degrees C/24 hPa, equilibrium moisture content of 41 percent by mass). These can be used alone or in combination. Of these, glycerin and 1,3-butanediol are preferable.

Specific examples of the humectants other than polyols include, but are not limited to, 2-methyl-1,3-butane diol (bp of 214 degrees C), 3-methyl-1,3-butane diol (bp of 203 degrees C), dipropylene glycol (bp of 232 degrees C), 1,5-pentane diol (bp of 242 degrees C), propylene glycol (bp of 187 degrees C), 2-methyl-2,4-pentane diol (bp of 197 degrees C), ethylene glycol (bp of from 196 to 198 degrees C), tripropylene glycol (bp of 267 degrees C), hexylene glycol (bp of 197 degrees C), polyethylene glycol (sticky liquid to solid), polypropylene glycol (bp of 187 degrees C), 1,6-hexane diol (bp of from 253 to 260 degrees C), 1,2,6-hexane triol (bp of 178 degrees C), trimethyl ethane (solid, melting point of from 199 to 201 degrees C), and trimethylol propane (solid, melting point of 61 degrees C).

The proportion of the organic solvent to the entire ink is preferably from 10.0 to 75.0 percent by mass and more preferably from 15.0 to 50.0 percent by mass. A proportion of an organic solvent of 10.0 percent by mass or more enhances moisturizing effect in each ink. A proportion of an organic solvent of 75.0 percent by mass or less enhances the drying property of each ink on a recording medium.

For a little or never-permeating recording medium, it is preferable to use an organic solvent having a solubility parameter of 9.0 to less than 11.8 (J/cm³)^{1/2}.

Specific examples of organic solvents having a solubility parameter of from 9.0 to less than 11.8 (J/cm³)^{1/2} includes, but are not limited to, 3-ethyl-3-oxetane methanol (SP value of 11.31 (J/cm³)^{1/2}), 3-methyl-3-oxetane methanol (SP value of 11.79 (J/cm³)^{1/2}), β-methoxy-N,N-dimethyl propionamide (SP value of 9.19 (J/cm³)^{1/2}), β-butoxy-N,N-dimethyl propionamide (SP value of 9.03 (J/cm³)^{1/2}), 1,2-hexanediol (SP value of 11.8 (J/cm³)^{1/2}), 2-ethyl-1,3-hexanediol (SP value of 11.07 (J/cm³)^{1/2}), 2,2,4-trimethyl-1,3-pentanediol (SP value of 11.19 (J/cm³)^{1/2}), diethylene glycol monoethyl ether (SP value of 10.14 (J/cm³)^{1/2}), 3-methoxy-1-butanol (SP value of 9.64 (J/cm³)^{1/2}), 3-methoxy-3-methyl-1-butanol (SP value of 9.64 (J/cm³)^{1/2}), 3-methyl-1,5-pentanediol (SP value of 11.8 (J/cm³)^{1/2}), methylpropylene triglycol (SP value of 9.43 (J/cm³)^{1/2}), diethylene glycol mono-n-butyhlether (SP value of 9.86 (J/cm³)^{1/2}), diethylene glycol monomethyl ether (SP value of 10.34 (J/cm³)^{1/2}), triethylene glycol monomethylether (SP value of 10.21 (J/cm³)^{1/2}), propylene glycol monopropyl ether (SP value of 9.82 (J/cm³)^{1/2}), propylene glycol monomethyl ether (SP value of 10.19 (J/cm³)^{1/2}), propylene glycol monobutyl ether (SP value of 9.69 (J/cm³)^{1/2}), 3-methoxy-1-butanol (SP value of 10.65 (J/cm³)^{1/2}), 3-methoxy-1-propanol (SP value of 10.41 (J/cm³)^{1/2}), dipropylene glycol monomethyl ether (SP value of 9.84 (J/cm³)^{1/2}), and 3-methyl-1,5-pentanediol (SP value of 11.80 (J/cm³)^{1/2}). These can be used alone or in combination.

The proportion of an organic solvent having a solubility parameter of from 9.0 to less than 11.8 (J/cm³)^{1/2} to the mass of each ink is from 5.0 to 60.0 percent by mass and more preferably from 10.0 to 30.0 percent by mass. A proportion of an organic solvent of from 5.0 to 60.0 percent by mass minimizes color bleed and beading or control static surface tension and dynamic surface tension and enhances the coloring or each ink.

The mass ratio of a coloring material to an organic solvent is suitably adjusted to enhance the discharging stability of ink and minimize fixation of waste ink in the maintenance mechanism in an image forming apparatus. When an inkjet head discharges ink having a coloring material at a large proportion and an organic solvent at a small proportion, discharging defects may occur as the moisture evaporates around the ink meniscus of nozzles.

### Water

As the water, pure water and hyper pure water such as deionized water, ultrafiltered water, reverse osmosis water, and distilled water can be used.

The proportion of water in each ink is not particularly limited and can be suitably selected to suit to a particular application. The proportion is preferably from 10.0 to 90.0 percent by mass and more preferably from 20.0 to 60.0 percent by mass of the mass of each ink to enhance the drying property and discharging reliability of each ink.

### Coloring Material

The white ink contains a white coloring material and the color ink contains a colored coloring material. In th present disclosure, the white coloring material and the colored coloring material are simply referred to as coloring material when they are not distinguished from each other.

One of the coloring material is a pigment. The pigment includes an inorganic pigment or organic pigment. These can be used alone or in combination. Examples of the pigments include, but are not limited to, black pigments, yellow pigments, magenta pigments, cyan pigments, white pigments, green pigments, orange pigments, and gloss or metallic pigments of gold, silver, and others.

Specific examples of the inorganic pigments include, but are not limited to, titanium oxide, iron oxide, calcium oxide, barium sulfate, aluminum hydroxide, barium yellow, cadmium red, chrome yellow, and carbon black. Of these, carbon black is preferable. Carbon black can be manufactured by a known method such as a contact method, a furnace method, and a thermal method.

Specific examples include, but are not limited to, channel black, furnace black, gas black, and lamp black.

Specific examples of the organic pigments include azo pigments, polycyclic pigments, dye chelates, nitoro pigments, nitroso pigments, and aniline black. Of these, azo pigments and polycyclic pigments are preferable.

Specific examples of the azo pigments include, but are not limited to, azo lake, insoluble azo pigments, azo pigment condensates, and chelate azo pigments.

Specific examples of the polycyclic pigments include, but are not limited to, phthalocyanine pigments, perylene pigments, perinone pigments, anthraquinone pigments, quinacridone pigments, dioxazine pigments, indigo pigments, thioindigo pigments, isoindolinone pigments, and quinofuranone pigments.

Specific examples of the dye chelate include, but are not limited to, basic dye type chelates and acid dye type chelates.

Specific examples of the organic pigment include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 128, 139, 150, 151, 153, 155, 180, 183, 185 and 213; C.I. Pigment Orange 5, 13, 16, 17, 36, 43, and 51; C.I. Pigment Red 1, 2, 3, 5, 17, 22, 23, 31, 38, 48:2 {Permanent Red 2B(Ca)}, 48:3, 48:4, 49:1, 52:2, 53:1, 57:1 (Brilliant Carmine 6B), 60:1, 63:1, 63:2, 64:1, 81, 83, 88, 101 (rouge), 104, 105, 106, 108 (Cadmium Red), 112, 114, 122 (Quinacridone Magenta), 123, 146, 149, 166, 168, 170, 172, 177, 178, 179, 185, 190, 193, 209, and 219; C.I. Pigment Violet 1 (Rohdamine Lake), 3, 5:1, 16, 19, 23, and 38; C.I. Pigment Blue 1, 2, 15 (Phthalocyanine Blue), 15:1, 15:2, 15:3 (Phthalocyanine Blue), 16, 17:1, 56, 60, and 63; and C.I. Pigment Green 1, 4, 7, 8, 10, 17, 18, and 36.

The BET specific surface area of a pigment is preferably from 10 to 1,500 m²/g , more preferably from 20 to 600 m²/g, and particularly preferably from 50 to 300 m²/g. Pigment is reduced in size or pulverized using a ball mill, a jet mill, or ultrasonic wave to achieve a target BET specific surface area.

The 50 percent cumulative volume particle diameter D₅₀ of a pigment is preferably from 50 to 350 nm in each ink.

The proportion of pigment to the mass of ink is preferably from 1.0 to 15.0 percent by mass and more preferably from 1.5 to 10.0 percent by mass in solid content. A proportion of 1.0 percent by mass or more enhances the coloring of each ink and image density. A proportion of 15.0 percent by mass or less stabilizes discharging of each ink.

The coloring material can be an organic pigment or a complex pigment covering an inorganic pigment particle with an organic pigment or carbon black. The complex pigment can be manufactured by precipitating organic pigments under the presence of inorganic pigments or mechanically mixing and grinding inorganic pigments and organic pigments, which is referred to as mechanochemical method. Optionally, it is possible to provide an organosilane compound layer formed of polysiloxane and alkylsilane between inorganic pigments and organic pigments for improving attachability between them.

The mass ratio of inorganic pigment particles or organic pigment particles to organic pigment covering these particles or carbon black is preferably from 3:1 to 1:3 and more preferably from 3:2 to 1:2 to achieve good coloring, color tone, and transparency.

Specific examples of the procurable complex pigments include, but are not limited to, products having a small particle diameter such as silica/carbon black complex material, silica/phthalocyanine complex material PB15:3, silica/disazo yellow complex material, and silica/quinacridone complex material PR122, all manufactured by TODAKOGYO CORP.

Complex pigments of inorganic pigment particles having a primary particle diameter of 20 nm covered with an equivalent amount of an organic pigment have a primary particle diameter of about 25 nm. If such complex pigments are dispersed with a suitable dispersant to the degree of the primary particle, ultrafine complex pigment dispersion ink having a dispersion particle diameter of 25 nm can be manufactured. The organic pigment forming the surface of a complex pigment relates to dispersion.

However, it is necessary to use a pigment dispersant that can stably disperse both of the organic pigment and inorganic pigment at the same time because the feature of the inorganic pigment at the center of the complex pigment demonstrates through the thin organic pigment layer having a thickness of about 2.5 nm.

For an ink set further containing pre-processing fluid, the coloring material is preferably anionic and more preferably an anionic pigment as described above. The anionic pigment includes, but is not limited to, a surfactant dispersion pigment in which a pigment is dispersed with a surfactant, a resin dispersion pigment in which a pigment is dispersed with a resin, a resin coverage dispersion pigment in which the surface of a pigment is covered with a resin, a self-dispersion pigment in which a hydrophilic group is provided to the surface of a pigment. Water-dispersible pigments are preferable in any of these dispersion forms.

An anionic resin coverage pigment or anionic self-dispersion pigment preferably has at least one hydrophilic group on its surface. Specific examples of such hydrophilic groups include, but are not limited to, -COOM, -SO₃M, -PO₃HM, -PO₃M₂, -CONM₂, -SO₃NM₂, -NH-C₆H₄-COOM, -NH-C₆H₄-SO₃M, -NH-C₆H₄-PO₃HM, -NH-C₆H₄-PO₃M₂, -NH-C₆H₄-CONM₂, and -NH-C₆H₄-SO₃NM₂. Known methods are utilized to introduce these hydrophilic groups. M in the hydrophilic group is preferably a counter ion or quaternary ammonium ion.

Specific examples of the quaternary ammonium ions include, but are not limited to, tetramethyl ammonium ion, tetraethyl ammonium ion, tetrapropyl ammonium ion, tetrabutyl ammonium ion, tetra pentyl ammonium ion, benzyl trimethyl ammonium ion, benzyl triethyl ammonium ion, and tetrahexyl ammonium ion. Of these, tetraethyl ammonium ion, tetrabutyl ammonium ion, and benzyl trimethyl ammonium ion are preferable and tetrabutyl ammonium ion is more preferable. Each ink using the pigment mentioned above demonstrates excellent storage stability over time and minimizes an increase in viscosity during moisture vaporing. This is because even an organic rich solvent resulting from water rich solvent due to evaporation of moisture is inferred to stabilize dispersion of pigment because of the hydrophilic group having a quaternary ammonium ion.

Other than the pigments having the hydrophilic group mentioned above, polymer emulsions in which polymer particulates contain a pigment are preferable. The pigment can be encapsulated in a polymer particulate or adsorbed to the surface thereof. All of the pigment particles are not necessarily encapsulated or adsorbed. Some of them may be dispersed in an emulsion.

Specific examples of the polymer for polymer particulate include, but are not limited to, vinyl-based polymers, polyester-based polymers, and polyurethane-based polymers. Of these, vinyl-based polymers and polyester-based polymers are particularly suitable.

### Resin

The resin mentioned above is not particularly limited. Resin having excellent film forming property with anti-solvent property, water resistance, and weatherability is good for image forming. Condensation-based synthetic resin, addition-based synthetic resin, and natural polymers are preferable. A preferable form of resin particle is a water-dispersible resin.

For an ink set further containing pre-processing fluid, anionic resin is preferable as described above.

Specific examples of the condensation-based synthetic resin include, but are not limited to, polyester resin, polyurethane resin, polyepoxy resin, polyamide resin, polyether resin, poly(meth)acrylic resin, acrylic-silicone resin, and fluorochemical resin.

Specific examples of the addition-based synthetic resin include, but are not limited to, polyolefine resin, polystyrene resin, polyvinyl alcohol resin, polyvinyl ester resin, polyacrylic acid resin, and unsaturated carboxylic acid resin.

Specific examples of the natural polymer include, but are not limited to, celluloses, rosins, and natural rubber.

Polyurethane resin is preferably used to improve the fixability of ink when the ink is applied to a little or never permeating recording medium such as commercial printing paper or film.

This polyurethane resin preferably has a structure derived from polyol having the structure represented by Chemical Structure (A) below to further enhance the fixability of ink.

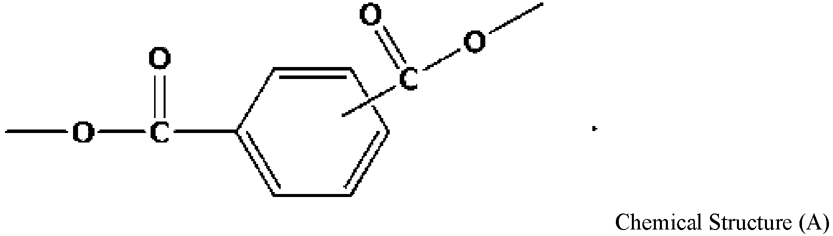

Specific examples of the polyol material having a structure represented by Chemical Structure (A) include, but are not limited to, terephthalic acid and isophthalic acid.

The proportion of the polyol material having a structure represented by Chemical Structure (A) is preferably from 10 to 30 percent by mass to the entire material of polyurethane resin and about 50 percent by mass to the entire material of polyol material. Alcohol resistance is enhanced when the proportion of the polyol material having the structure represented by Chemical Structure (A) is within the range specified above.

The water-dispersible resin mentioned above has self-dispersibility due to its hydrophilic group. Alternatively, dispersibility is imparted by a surfactant or another resin having a hydrophilic group. Of these, emulsion of resin particles is preferable, which is obtained by emulsifying or suspending ionomers or unsaturated monomers of polyester resin or polyurethane resin.

It is easy to obtain a water-dispersible resin by emulsification polymerization because resin emulsion is obtained by allowing to react substances such as an unsaturated monomer, polymerization initiator, surfactant, chain transfer agent, chelate agent, and pH regulator in water. In addition, target properties of resin can be readily obtained by changing resin components.

pH of ink is preferably from 4 to 12 to prevent cleavage of molecule chains caused by dispersion breakage or hydrolysis in a strong alkali or acidic environment. pH is more preferably from 7 to 11 and furthermore preferably from 8 to 10.5 in terms of miscibility with water-dispersible coloring material.

The water-dispersible resin mentioned above fixes water-dispersible coloring material onto a recording medium and forms a film at room temperature or higher, which improves the fixability of the coloring material. The minimum film-forming temperature (MFT) of the water-dispersible resin is thus preferably 100 degrees C or lower.

When the glass transition temperature of the water-dispersible resin is -40 degrees C or lower, the resin film becomes sticky, causing printed matter tacky. The glass transition temperature is thus preferably -30 degrees C or higher. The proportion of water-dispersible resin to the mass of ink is preferably from 0.5 to 20.0 percent by mass and more preferably from 1.0 to 15.0 percent by mass in solid content.

The proportion of polyurethane resin to the mass of ink is preferably 3.0 percent by mass or more and the mass ratio of the solid content of a coloring material to the polyurethane resin is preferably at 1.0:(2.0 to 12.0) and more preferably at 1.0:(2.0 to 11.0) when ink containing the polyurethane resin is applied to a little or never permeating recording medium such as commercial printing media or film.

### Surfactant

The white ink and the color ink contain a surfactant to prevent color bleed and beading, in other words, controlling static surface tension and dynamic surface tension. Examples of surfactant include, but are not limited to, polyether-modified siloxane compound siloxane compounds, acetylene glycol surfactants, and acetylene alcohol surfactants. Fluorochemical surfactants and silicone-based surfactants can be used in combination with the surfactants mentioned above. The use of a surfactant prevents each ink from readily wetting or fixating on the repellent ink film on the nozzle plate of an inkjet head, which minimizes defective discharging, resulting in enhancement of the discharging stability.

The polyether-modified siloxane compound mentioned above is preferably represented by the Chemical Formulae (1) to (5) below.

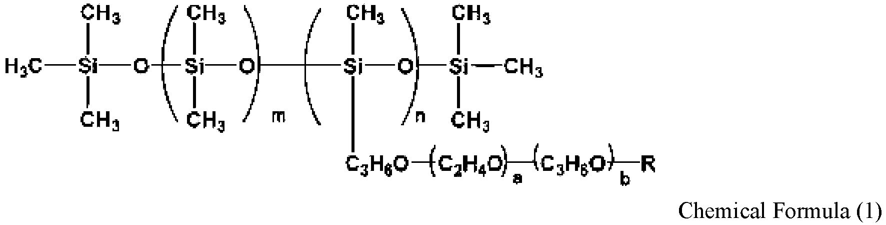

In the Chemical Formula (1), R represents a hydrogen atom or an alkyl group having 1 to 4 carbon atoms, m represents 0 or an integer of from 1 to 23, n represents an integer of from 1 to 10, a represents an integer of from 1 to 23, and b represents 0 or an integer of from 1 to 23.

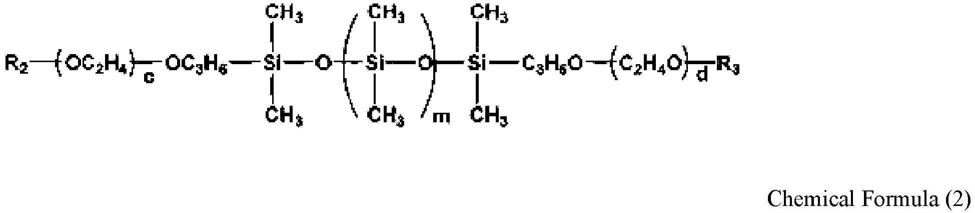

In the Chemical Formula (2), R₂ and R₃ each, independently represent hydrogen atoms or alkyl groups having 1 to 4 carbon, m represents an integer of from 1 to 8, and c and d each, independently represent integers of from 1 to 10.

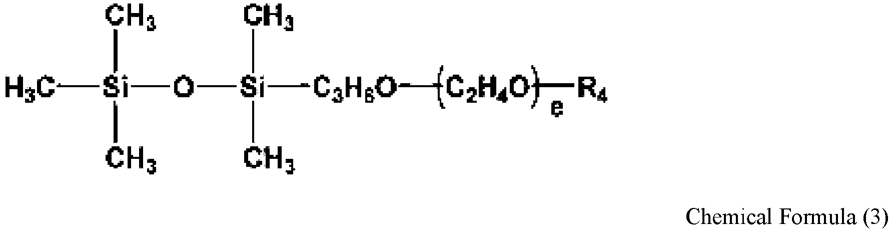

In the Chemical Formula (3), R₄ represents a hydrogen atom or an alkyl group having 1 to 4 carbon atoms and e represents an integer of 1 to 8.

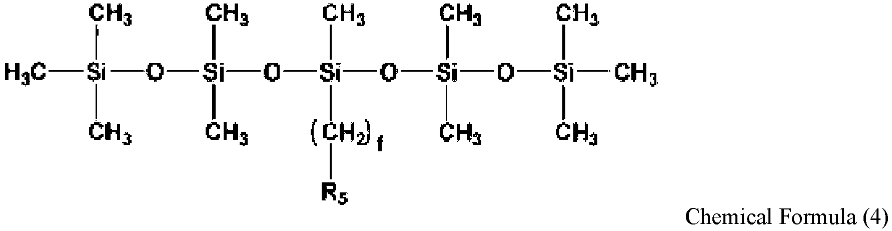

In the Chemical Formula (4), R₅ represents a polyether group represented by the following Chemical Formula (5) and f represents an integer of from 1 to 8.

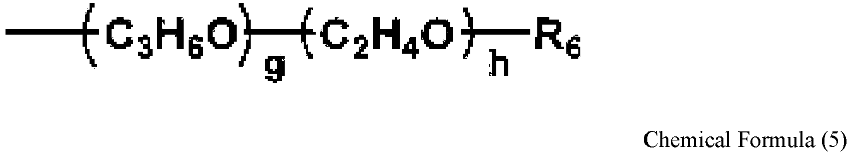

In the Chemical Formula (5), R₆ represents a hydrogen atom or an alkyl group having 1 to 4 carbon atoms, g represents 0 or an integer of from 1 to 23, and h represents 0 or an integer of from 1 to 23, excluding the case in which g and h are simultaneously 0.

The compound represented by Chemical Formula (1) includes, but are not limited to, the compound represented by the Chemical Structures (1) to (8) below.

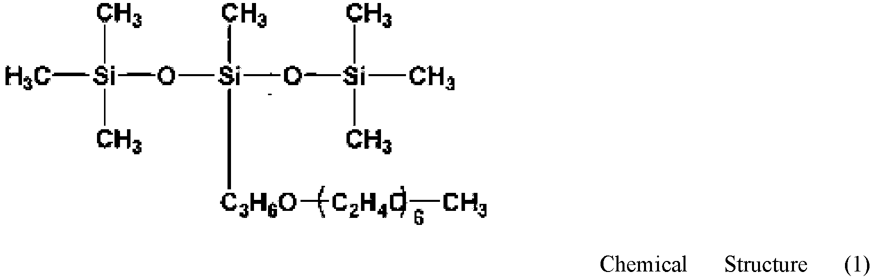

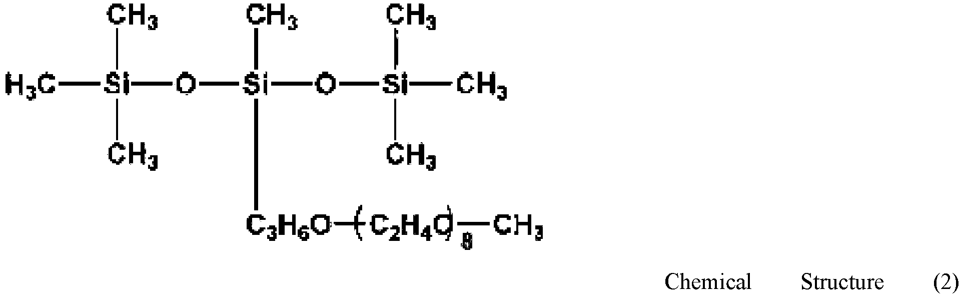

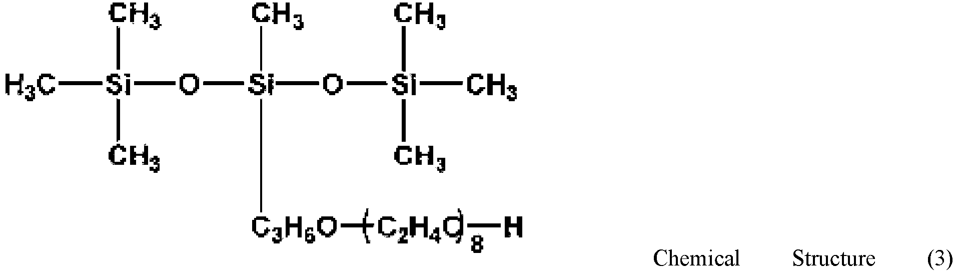

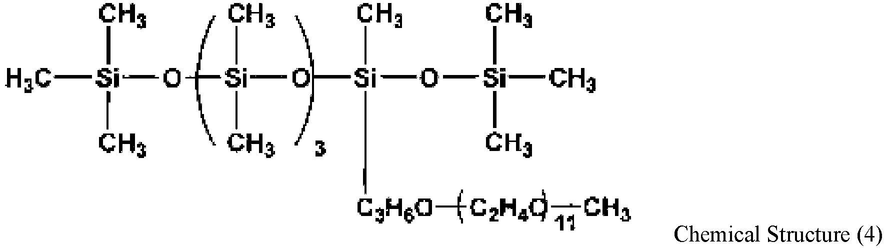

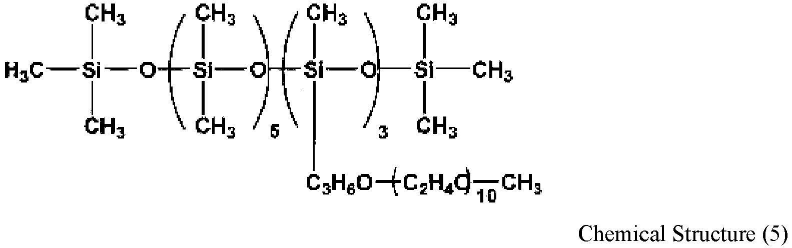

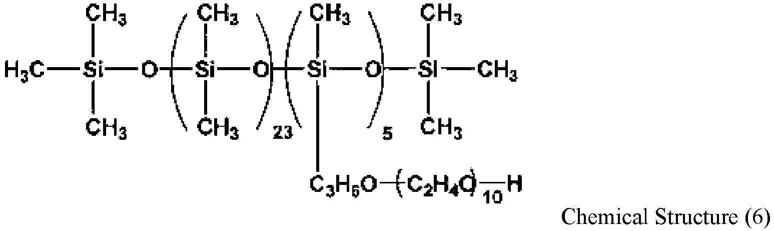

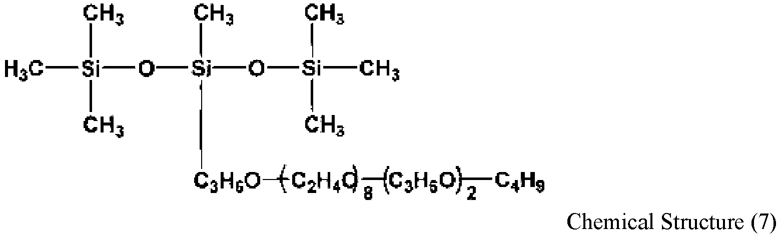

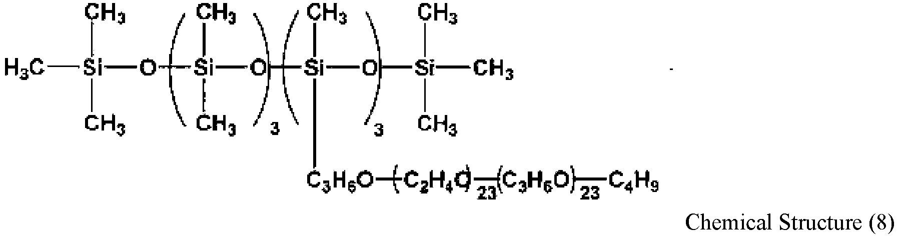

The compound represented by the Chemical Formula (2) includes, but are not limited to, the compound represented by the Chemical Structure (9) below.

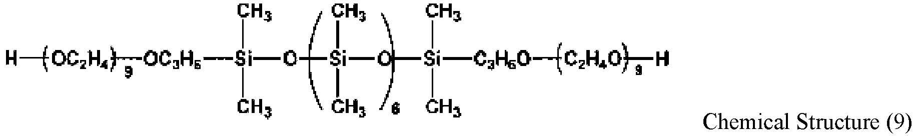

The compound represented by the Chemical Formula (3) includes, but are not limited to, the compound represented by the Chemical Structure (10) below.

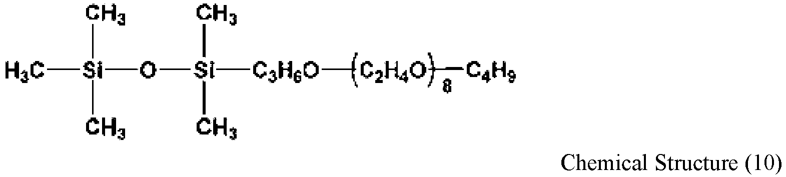

The compound represented by Chemical Formula (4) includes the compound represented by the Chemical Structures (11) to (13) below.

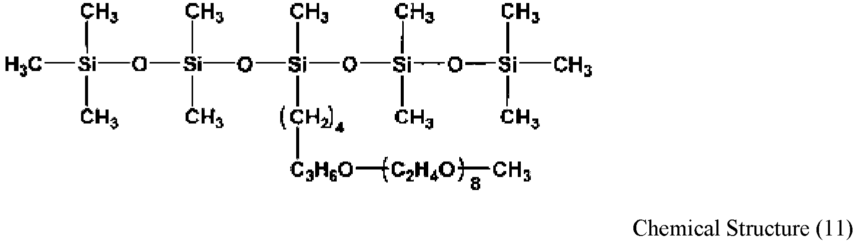

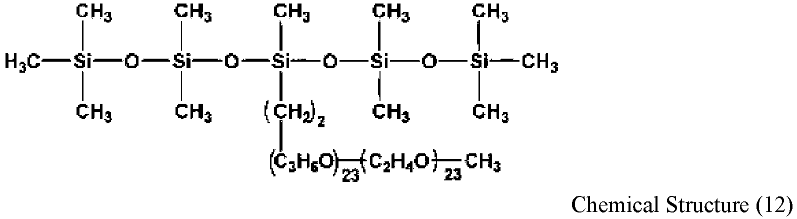

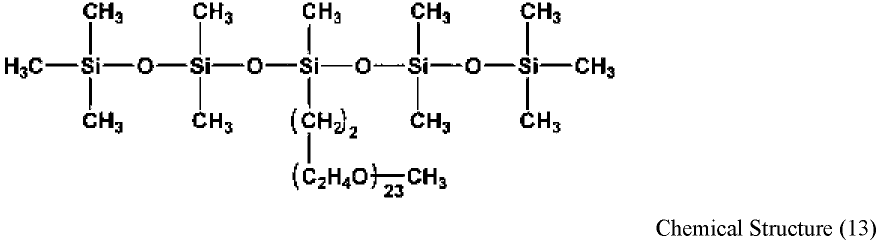

Furthermore, specific examples of procurable polyether-modified siloxane compound include, but are not limited to, 71 ADDITIVE, 74 ADDITIVE, 57 ADDITIVE, 8029 ADDITIVE, 8054 ADDITIVE, 8211 ADDITIVE, 8019 ADDITIVE, 8526 ADDITIVE, and FZ-2123, FZ-2191, all manufactured by Dow Corning Toray Co., Ltd., TSF 4440, TSF 4441, TSF 4445, TSF 4446, TSF 4450, TSF 4452, and TSF 4460, all manufactured by Momentive Performance Materials Inc., SILFACE SAG 002, SILFACE SAG 003, SILFACE SAG 005, SILFACE SAG 503A, SILFACE SAG 008, and SILFACE SJM 003, all manufactured by Nisshin Chemical Co., Ltd., TEGO WetKL 245, TEGO Wet 250, TEGO Wet 260, TEGO Wet 265, TEGO Wet 270, and TEGO Wet 280, all manufactured by Evonik Industries AG, and BYK-345, BYK-347, BYK-348, BYK-375, and BYK-377, all manufactured by BYK Japan KK.

Acetylene glycol surfactant or acetylene alcohol surfactant is procurable. Specific examples include, but are not limited to, Surfynol 104, Surfynol 104E, Surfynol 420, Surfynol 440, Surfynol 465, Surfynol SE, Surfynol SEF, Surfynol PSA-336, Surfynol DF110D, Surfynol DF58, OLFINE^{registered} E1004, OLFINE^{registered} E1010, OLFINE^{registered} E1020, OLFINE^{registered} PD-001, OLFINE^{registered} PD-002W, OLFINE^{registered} PD-004, OLFINE^{registered} PD-005, OLFINE^{registered} EXP.4001, OLFINE^{registered} EXP. 4200, OLFINE^{registered} EXP.4123, and OLFINE^{registered} EXP.4300 (all manufactured by Nissin Chemical co., ltd.)

The proportion of surfactant to the mass of ink is 0.001 percent by mass or more, preferably from 0.001 to 5.0 percent by mass and more preferably from 0.5 to 3.0 percent by mass. Surfactant has a good impact when the proportion is 0.001 percent by mass or more. The effect of surfactant does not increase any more when the proportion surpasses 5.0 percent by mass.

### Other Components

As the other components, known additives can be used, including foam inhibitors (defoaming agent), pH regulators, preservatives and fungicides, chelate reagents, corrosion inhibitors, anti-oxidants, ultraviolet absorbers, oxygen absorbers, and photostabilizing agents.

### Foam Inhibitor

A minimal amount of a foam inhibitor is added to ink to prevent foaming in the ink. Foaming means that liquid forms a thin film enclosing air. The properties such as surface tension and viscosity of ink relate to forming foams. That is, liquid like water having a strong surface tension makes the surface area as least as possible so that it does not readily foam. Conversely, sticky ink with a high permeation property is likely to foam because it has a low surface tension. The foam formed due to this high viscosity does not readily break but is maintained.

Normally, a foam inhibitor breaks foams by locally lowering the surface tension of foam film, or by dotting on the surface of foaming liquid when the foam inhibitor is insoluble in the foaming liquid. A foaming inhibitor utilizing the former mechanism cannot break foams when a polyether-modified siloxane compound is used as surfactant because it extremely reduces the surface tension. The latter foam inhibitor is thus preferable; however, this inhibitor may degrade the stability of ink since it is not dissolved in the solution.

Conversely, the foam inhibitor represented by the following Chemical Formula (6) is less able to reduce the surface tension than a polyether-modified siloxane compound but highly compatible with the compound. It is thus inferred that foam film efficiently takes in this inhibitor, locally becomes unstable due to the difference in the surface tension between the inhibitor and a polyether-modified siloxane compound, and finally breaks.

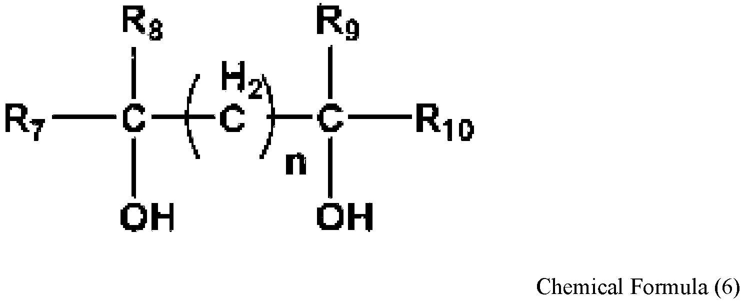

In the Chemical Formula (6), R₇ and R₈ each, independently represent alkyl groups having 3 to 6 carbon atoms, R₉ and R₁₀ each, independently represent alkyl groups having one or two carbon atoms, and n represents an integer of from one to six.

Specific examples of the compound represented by the Chemical Formula (6) include, but are not limited to, 2,4,7,9-tetramethyldecane-4,7-diol and 2,5,8,11-tetramethyl dodecane-5,8-diol. Of these, considering reduction on foam production and compatibility with ink, 2,5,8,11-tetramethyldodecane-5,8-diol is preferable.

The proportion of the foam inhibitor to the mass of ink is preferably from 0.01 to 10.0 percent by mass and more preferably from 0.1 to 5.0 percent by mass. A proportion of 0.01 percent by mass or more enhances the defoaming property. A proportion of 10 percent by mass or less minimizes adverse impacts on the ink properties such as viscosity and particle diameter.

### pH Regulator

The pH regulator mentioned above is not particularly limited as long as it can adjust the pH of ink and can be suitably selected to suit to a particular application.

Specific examples include, but are not limited to, alcohol amines, hydroxides of alkali metal, ammonium hydroxides, phosphonium hydoxides, and carbonates of alkali metal. pH of ink is preferably from 7 to 11 to enhance the discharging stability of ink.

Specific examples of the alcohol amines include, but are not limited to, diethanolamine, triethanolamine, and 2-amino-2-ethyl-1,3-propanediol.

Specific examples of the hydroxides of alkali metal elements include, but are not limited to, lithium hydroxide, sodium hydroxide, and potassium hydroxide.

Specific examples of the hydroxides of ammonium include, but are not limited to, ammonium hydroxide and quaternary ammonium hydroxide.

A specific example of the phosphonium hydroxides is quaternary phosphonium hydroxide.

Specific examples of the carbonates of alkali metal include, but are not limited to, lithium carbonate, sodium carbonate, and potassium carbonate.

### Preservatives and Fungicides

Specific examples of the preservatives and fungicides include, but are not limited to, dehydrosodium acetate, sodium sorbinate, sodium 2-pyridine thiol-1-oxide, sodium benzoate, and pentachlorophenol sodium.

### Chelate Reagent

Specific examples of the chelate reagents include, but are not limited to, ethylene diamine sodium tetraacetate, nitrilo sodium triacetate, hydroxyethylethylene diamine sodium tri-acetate, diethylenetriamine sodium quinternary acetate, and uramil sodium diacetate.

### Corrosion Inhibitor

Specific examples of the corrosion inhibitor include, but are not limited to, acid sulfite, thiosodium sulfate, ammonium thiodiglycolate, diisopropyl ammonium nitrite, pentaerythritol quaternary nitrite, and dicyclohexyl ammonium nitrite.

### Anti-oxidant

Specific examples of the anti-oxidants include, but are not limited to, phenol-based anti-oxidants (including hindered phenol-based anti-oxidants), amino-based anti-oxidants, sulfur-based anti-oxidants, and phosphorous-based anti-oxidants.

### Ultraviolet Absorber

Specific examples of the ultraviolet absorbent include, but are not limited to, a benzophenone-based ultraviolet absorbent, a benzotriazole-based ultraviolet absorbent, a salicylate-based ultraviolet absorbent, a cyanoacrylate-based ultraviolet absorbent, and a nickel complex salt-based ultraviolet absorbent.

### Property of Ink

The properties of each ink are not particularly limited and can be suitably selected to suit to a particular application.

The viscosity of each ink at 25 degrees C is preferably from 5 to 25 mPa·s and more preferably from 6 to 20 mPa·s. An ink viscosity of 5 mPa·s or greater enhances the image density and text quality of ink. An ink viscosity of 25 mPa·s or less enhances ink dischargeability.

Viscosity can be measured at 25 degree C by an instrument such as a viscometer (RE-85L, manufactured by TOKI SANGYO CO., LTD.)

### Method of Manufacturing Each Ink

Each ink can be manufactured by stirring and mixing materials and heating the obtained mixture at a temperature range of from 40 to lower than 70 degrees C for at least six hours. The materials are stirred and mixed by a device such as a sand mill, homogenizer, ball mill, paint shaker, and ultrasonic dispersion.

### Pre-processing Fluid

The pre-processing fluid mentioned above contains a flocculant and other optional substances such as resin particles, wax particles, organic solvents, water, and surfactants.

### Flocculant

Flocculant in the present disclosure means a component for aggregating or thickening white ink or color ink upon a contact between pre-processing fluid and the white ink or color ink, specifically, a component for aggregating water-dispersible particles such as the anionic compound mentioned above including the coloring material or resin contained in the white ink or color ink. White ink or color ink aggregates or becomes sticky when it contacts pre-processing fluid containing such a flocculant so that the white ink or color ink stays on the surface of a recording medium.

Examples of the flocculant include, but are not limited to, cationic compounds such as inorganic metal salts, organic acid metal salts, organic acid ammonium salts, and cationic polymers.

Specific examples of the inorganic metal salts include, but are not limited to, magnesium sulfate, aluminum sulfate, manganese sulfate, nickel sulfate, iron (II) sulfate, copper (II) sulfate, zinc sulfate, iron (II) nitrate, iron (III) nitrate, cobalt nitrate, strontium nitrate, copper (II) nitrate, nickel (II) nitrate, lead (II) nitrate, manganese (II) nitrate, nickel (II) chloride, calcium chloride, tin (II) chloride, strontium chloride, barium chloride, magnesium chloride, sodium sulfate, potassium sulfate, lithium sulfate, sodium hydrogensulfate, potassium hydrogensulfate, sodium nitrate, potassium nitrate, sodium carbonate, potassium carbonate, sodium hydrogencarbonate, potassium hydrogencarbonate, sodium chloride, and potassium chloride.

Specific examples of the organic acid metal salts include, but are not limited to, L-sodium aspartate, L-magnesium aspartate, calcium ascorbate, L-sodium ascorbate, sodium succinate, disodium succinate, aluminum citrate, potassium citrate, calcium citrate, tripotassium citrate, trisodium citrate, diammonium citrate, disodium citrate, zinc lactate, aluminum lactate, potassium lactate, calcium lactate, sodium lactate, magnesium lactate, calcium acetate, potassium tartrate, calcium tartrate, DL-sodium tartrate, and sodium potassium tartrate.

The inorganic metal salt and organic metal salt are preferably at lease one member selected from the group consisting of a calcium salt, a magnesium salt, a nickel salt, and aluminum salt. These salts enhance the feature of aggregating water-dispersible particles contained in white ink or color ink and minimizes the occurrence of color bleed and beading. They are also preferable to enhance the storage stability of pre-processing fluid.

Specific examples of the organic acid ammonium salt include, but are not limited to, ammonium acetate, ammonium propionate, ammonium oxalate, ammonium tartrate, ammonium succinate (diammonium succinate), diammonium maronate, diammonium hydrogen citrate, hydrogen citrate, triammonium citrate, and ammonium L-glutaminate.

As the cationic polymer, quaternary ammonium salt type cationic polymers are preferable. Specific examples include, but are not limited to, polymers of dialkylaryl ammonium chloride, polymers of dialkyl aminoethyl (meth)acrylate quaternary ammonium salts, polymers of modified polyvinyl alcohol dialkyl ammonium salts, and polymers of dialkyl diallyl ammonium salts.

Specific examples of the other cationic polymers include, but are not limited to, cationic specially-modified polyamine compounds, cationic polyamide polyamine compounds, cationic urea-formarine resin compounds, cationic polyacrylic amide compounds, cationic alkyl ketene dimers, cationic dicyane diamide compounds, cationic dicyan diamide-formarine condensation compounds, cationic dicyan diamide-polyamine condensation compounds, cationic polyvinyl formamide compounds, cationic polyvinyl pyridine compounds, cationic polyalkylene polyamine compounds, and cationic epoxy polyamide compounds.

The compounds represented by the Chemical Formulae (7) to (9) are particularly preferable as the cationic polymer.

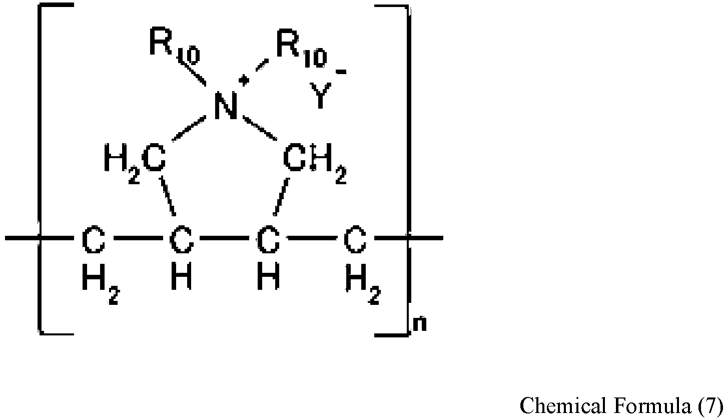

In the Chemical Formula (7), R₁₀ represents a methyl or ethyl group and Y⁻ represents a halogen ion, and n represents an integer.

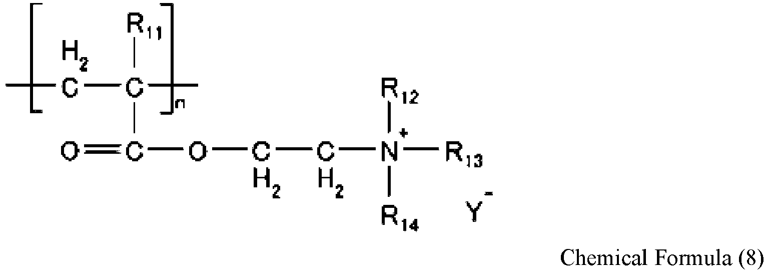

In the Chemical Formula (8), Y⁻ represents a halogen ion, nitrate ion, nitrite ion, or acetate ion, R₁₁ represent a hydrogen or CH₃, R₁₂, R₁₃, and R₁₄ each, independently represent hydrogens or alkyl groups, and N represents an integer.

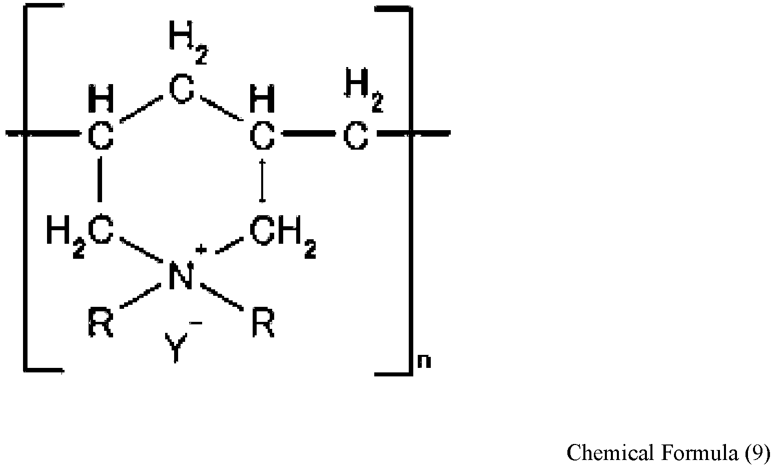

**In** the Chemical Formula (9), R represents a methyl or ethyl group and Y⁻ represents a halogen ion, nitrate ion, nitrite ion, or acetate ion, and n represents an integer.

The proportion of a flocculant to the mass of pre-processing fluid is from 0.1 to 30.0 percent by mass and more preferably from 1.0 to 20.0 percent by mass to enhance the solubility of flocculant and minimize the occurrence of color bleed and beading.

### Resin Particulate

It is preferable that the pre-processing fluid contain resin particles. Pre-processing fluid containing resin particles enhances the attachability between white ink and color ink and a recording medium.

**In** order that the resin particles are coexistent with a flocculant as a cationic compound in pre-processing fluid, the resin particles are not preferably commonly used electron repulsion type emulsion but nonionic resin particles dispersed by steric barrier to achieve long term storage stability. Anionic resin particles of an electron repulsion type emulsion agglomerate when they are coexistent with an inorganic metal salt as an example of a flocculant.

These particles agglomerate instantly when the inorganic metal salt is a polyvalent metal salt that produces tri-valent cations at dissociation. Cationic resin particles are sufficiently stable when left in a room temperature environment. However, if these are heated and allowed to rest in an acceleration test for long-term stability, the cationic resin particles become sticky. The resin particle is thus preferably a nonionic resin particle as described above.

There is no specific limitation to the method for determining whether resin particles are nonionic resin particles. One way of determination is to isolate solid contents from pre-processing fluid by centrifugal and show that material having an acidic functional group such as carboxyl or sulfo or basic functional group such as amino is not detected in the solid content by a thermal decomposition gas chromatography mass spectroscopy analysis (GC-MS) equipment such as GC-17A, manufactured by Shimadzu Corporation.

Specific examples of the nonionic resin particle include, but are not limited to, polyolefin resin, chlorinated polyolefin resin, polyvinyl acetate resin, polyester resin, polyurethane resin, acrylic resin, styrene butadiene resin, and copolymers of polymerizable compound for use in polymerization of these resins. Ethylene-vinyl acetate copolymer resin, ethylene-vinyl acetate-vinyl chloride copolymer resin, and chlorinates olefin resin are preferable. These resins enhance the attachability between white ink, color ink and a recording medium.

The glass transition temperature (Tg) of the nonionic resin particle is preferably from -30 to 30 degrees C and more preferably from -25 to 25 degrees C. A Tg of -30 degrees C or higher makes resin film tough, which makes the layer formed by pre-processing fluid robust. A Tg of 30 degrees C or lower enhances the film forming property of resin and secures flexibility, thereby improving the attachability between white ink, color ink, and a recording medium.

The proportion of the solid content of resin particle to the mass of pre-processing fluid is preferably from 0.5 to 20.0 percent by mass. A proportion of from 0.5 to 20.0 percent by mass enhances the attachability between white ink, color ink and a recording medium.

### Wax Particle

The wax particle mentioned above is not particularly limited. Particles of water-dispersible wax can be used.

Specific examples include, but are not limited to, plant and animal wax such as carnauba wax, Carnauba wax, bee wax, rice wax, and lanoline, petrol-based wax such as polyethylene wax, microcrystalline wax, polyethylene wax, polypropylene wax, oxidized polyethylene wax, and pterolatum, mineral wax such as montan wax and ozokerite, synthetic wax such as carbon wax, Hoechst wax, polyethylene wax, and stearic acid amide. Of these, paraffin wax and polyethylene wax are preferable in terms of the attachability between white ink, color ink, and a recording medium and the dispersibility in pre-processing fluid.

The melting point of wax particles is preferably from 50 to 130 degrees C and more preferably from 60 to 120 degrees C. A melting point in the range specified above enhances the attachability between white ink and color ink and a recording medium.

The proportion of the solid content of wax to the mass of pre-processing fluid is preferably from 0.05 to 5.0 percent by mass and more preferably from 0.1 to 3.0 percent by mass. A proportion of from 0.05 to 5.0 percent by mass makes white ink stay around the surface of a recording medium, which enhances Hunter's Brightness. However, color bleed is likely to occur in comparison with pre-processing fluid containing no wax if pre-processing fluid containing wax is applied and then white ink layer is formed followed by image forming with color ink on the white ink layer.

### Organic Solvent

The organic solvent mentioned above is not particularly limited. Water-soluble organic solvents can be used. Examples of the water-soluble organic solvent are polyols, ethers such as polyol alkylethers and polyol arylethers, nitrogen-containing heterocyclic compounds, amides, amines, and sulfur-containing compounds.

Specific examples of the water-soluble organic solvent include, but are not limited to: polyhydric alcohols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butane diol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, triethylene glycol, 1,2,6-hexanetriol, 2-ethyl-1,3-hexanediol, ethyl-1,2,4-butane triol, 1,2,3-butanetriol, 2,2,4-trimethyl-1,3-pentanediol, and petriol; polyol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether; polyol aryl ethers such as ethylene glycol monophenyl ether and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methylformamide, N,N-dimethylformamide, 3-methoxy-N,N-dimethyl propioneamide, and 3-buthoxy-N,N-dimethyl propioneamide; amines such as monoethanolamine, diethanolamine, and triethylamine; sulfur-containing compounds such as dimethyl sulfoxide, sulfolane, and thiodiethanol; propylene carbonate, and ethylene carbonate.

It is preferable to use an organic solvent having a boiling point of 250 or lower degrees C, which serves as a humectant and imparts a good drying property at the same time.

Pre-processing fluid containing at least one of 1,2-propane diol, 1,3-butane diol, and 1,2-butane diol is likely to wet on the surface of a recording medium, which is preferable.

The proportion of an organic solvent in pre-processing fluid is not particularly limited and can be suitably selected to suit to a particular application. The proportion is preferably from 5.0 to 60.0 percent by mass and more preferably from 10.0 to 30.0 percent by mass to enhance the drying property and discharging reliability of the pre-processing fluid.

### Water

As the water mentioned above, pure water and hyper pure water such as deionized water, ultrafiltered water, reverse osmosis water, and distilled water can be used.

The proportion of water in processing fluid is not particularly limited and can be suitably selected to suit to a particular application. The proportion is preferably from 10.0 to 90.0 percent by mass and more preferably from 20.0 to 60.0 percent by mass of the mass of the processing fluid to enhance the drying property of the processing fluid.

### Surfactant

Examples of the surfactant include, but are not limited to, silicone-based surfactants, fluorochemical surfactants, amphoteric surfactants, nonionic surfactants, and anionic surfactants.

The silicone-based surfactant is not particularly limited and can be suitably selected to suit to a particular application. Of these, surfactants not degradable in a high pH environment are preferable. Examples of the silicone-based surfactants include, but are not limited to, side chain modified polydimethyl siloxane, both terminal-modified polydimethyl siloxane, one-terminal-modified polydimethyl siloxane, and side-chain-both-terminal-modified polydimethyl siloxane. In particular, silicone-based surfactants having a polyoxyethylene group or a polyoxyethylene polyoxypropylene group as a modification group are particularly preferable because such an aqueous surfactant demonstrates good properties. The silicone-based surfactant includes a polyether-modified silicone-based surfactant. One of the surfactant is a compound in which a polyalkylene oxide structure is introduced into the side chain of the Si site of dimethyl silooxane.

Specific examples of the fluorochemical surfactant include, but are not limited to, perfluoroalkyl sulfonic acid compounds, perfluoroalkyl carboxylic acid compounds, ester compounds of perfluoroalkyl phosphoric acid, adducts of perfluoroalkyl ethylene oxide, and polyoxyalkylene ether polymer compounds having a perfluoroalkyl ether group in its side chain. These are preferable because they do not readily produce foams.

Specific examples of the perfluoroalkyl sulfonic acid compounds include, but are not limited to, perfluoroalkyl sulfonic acid and salts of perfluoroalkyl sulfonic acid.

Specific examples of the perfluoroalkyl carbonic acid compounds include, but are not limited to, perfluoroalkyl carbonic acid and salts of perfluoroalkyl carbonic acid.

Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain, and salts of polyoxyalkylene ether polymers having a perfluoroalkyl ether group in its side chain. Counter ions of salts in these fluorochemical surfactants are, for example, Li, Na, K, NH₄, NH₃CH₂CH₂OH, NH₂(CH₂CH₂OH)₂, and NH(CH₂CH₂OH)₃.

Specific examples of the amphoteric surfactants include, but are not limited to, lauryl aminopropionic acid salts, lauryl dimethyl betaine, stearyl dimethyl betaine, and lauryl dihydroxyethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides.

Specific examples of the anionic surfactants include, but are not limited to, polyoxyethylene alkyl ether acetates, dodecyl benzene sulfonates, laurates, and polyoxyethylene alkyl ether sulfates.

### Other Components

Examples of other components include, but are not limited to, defoaming agents, preservatives and fungicides, and corrosion inhibitors.

### Defoaming Agent

The defoaming agent has no particular limit. Examples include, but are not limited to silicon-based defoaming agents, polyether-based defoaming agents, and aliphatic acid ester-based defoaming agents. These can be used alone or in combination. Of these, silicone-based defoaming agents are preferable to achieve the effect of foam breaking.

### Preservatives and Fungicides

The preservatives and fungicides are not particularly limited. One specific example is 1,2-benzisothiazoline-3-one.

### Corrosion Inhibitor

The corrosion inhibitor has no particular limitation. It includes, but are not limited to, 1,2,3-benzotriazole, acid sulfite, and sodium thiosulfate.

### Recording Medium

There is no specific limitation to the recording medium to which white ink , color ink, and pre-processing fluid are applied. The recording medium can be suitably selected to suit to a particular application. Such media include but are not limited to, plain paper, gloss paper, special paper, cloth, film, transparent sheets, and print sheet for general purpose. Of these, printing media having a poor permeation such as commercial printing paper, non-permeating printing media for signage, and fabric are preferable because color bleed and beading are likely to occur to them, which emphasizes the effect of the ink set of the present disclosure. Unlike film and paper, the surface of fabric is greatly rough. The amount of white ink and color ink applied to fabric thus increases, so that color bleed and beading are likely to occur.

Fabric is described as an example of the recording medium. "Fabric" in the present disclosure means a substance like textile, knitted work, and non-woven fabric, manufactured from fiber. The fiber is preferably organic fiber including synthetic fiber, semi-synthetic fiber, regenerated fiber, and natural fiber. Specific examples of synthetic fiber include, but are not limited to, polyester, polyamide, acrylic, polyolefin, polyvinyl alcohol, polyvinyl chloride, polyurethane, and polyimide. Specific examples of semi-synthetic fiber include, but are not limited to, acetate, diaceate, and triacetate. Specific examples of regenerated fiber include, but are not limited to, polynosic, rayon, lyocell, and cupra. Specific examples of natural fiber include, but are not limited to, cotton, hemp, silk, and wool. Of the fibers that form fabric, synthetic fiber such as polyester causes color bleed and beading more often than natural fiber such as cotton. The synthetic fiber is difficult to hold white ink on its surface. However, the ink set of the present disclosure works on such fabric, thereby minimizing the occurrence of color bleed and beading and holding white ink on the surface of the fabric.

Dark-colored fabric is preferable obtained as a result of the fiber for use in fabric chemically or physically retaining a colorant such as pigment or dye inside or on the surface. For dark-colored fabric, white background can be formed between the fabric and a color image to enhance the coloring of the color image. The ink set of the present disclosure containing white ink and color ink can suitably be used to form this background. "Dark-colored fabric" in the present disclosure satisfies the following relationships: 60 > L*, preferably 50 > L*, more preferably 40 > L*, and furthermore preferably 30 > L*, and particularly preferably 20 > L* when the luminosity (L*) of the fabric is measured by a spectrophotometer, e.g., X-rite exact (manufactured by X-Rite Inc.).

### Image Forming Apparatus and Image Forming Method

The image forming apparatus includes a container containing white ink, a container containing color ink, an applying device for applying the white ink to all or part of a recording medium, an applying device for applying the color ink to the all or part of a recording medium, where the white ink has been applied, and other optional elements. The other optional elements include, for example, a container containing a pre-processing fluid, an applying device for applying the pre-processing fluid to the all or part of a recording medium before applying the white ink thereto, and a heating device for heating the white ink, the color ink, and the pre-processing fluid applied to the recording medium. The applying device for applying white ink applies white ink to the all or part of a recording medium where the pre-processing fluid has been applied when an image forming apparatus includes a container containing the pre-processing fluid and an applying device for applying the pre-processing fluid.

The image forming method includes applying white ink to all or part of a recording medium, applying color ink to the all or part of a recording medium where the white ink has been applied, and other optional steps. The other optional steps include, for example, applying pre-processing fluid to the all or part of a recording medium before applying the white ink thereto and heating the white ink, the color ink, and the pre-processing fluid applied to the recording medium. In the applying white ink, the white ink is applied to the all or part of a recording medium where the pre-processing fluid has been applied when an image forming method includes applying the pre-processing fluid.

### Image Forming Apparatus

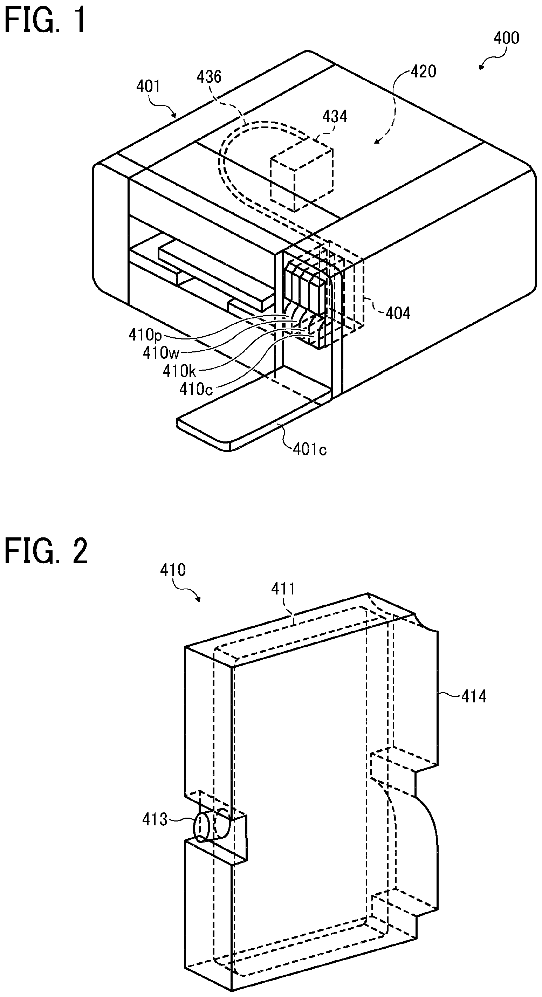

The image forming apparatus is described with reference to FIG. 1 and FIG. 2 FIG. 1 is a schematic diagram illustrating an example of the image forming apparatus. FIG. 2 is a schematic diagram illustrating an example of a container including a white ink container, a color ink container, or a pre-processing fluid container.

An image forming apparatus 400 illustrated in FIG. 1 includes a serial inkjet head. A mechanical assembly 420 is disposed in an exterior 401 of the image forming device 400. An accommodating unit 411 in a pre-processing fluid container 410p containing pre-processing fluid, a white ink container 410w containing white ink, a black ink container 410k containing black ink, or a cyan ink container 410c containing cyan ink is made of a packing material such as aluminum laminate film. The accommodating unit 411 is housed in a member such as a plastic container housing unit 414. Each container 410 is used in a form of cartridge.

A cartridge holder 404 is disposed on the rear side of the opening appearing when a cover 401c is opened. Each container 410 is detachably attached to the cartridge holder 404. The ink discharging outlet 413 of the container 410 communicates with an inkjet discharging head 434 via each supplying tube 436. This configuration makes it possible for the inkjet discharging head 434 to discharge pre-processing fluid and each ink to a recording medium as an applying device for applying pre-processing fluid and an applying device for applying ink.

The image forming apparatus 400 illustrated in FIG. 1 applies pre-processing fluid to a recording medium by inkjetting but can employ another method for applying processing fluid. It includes blade coating, roll coating, and spray coating.

The image forming apparatus 400 may furthermore optionally include a heating device for heating the white ink, color ink, or pre-processing fluid applied to the recording medium. It is, however, preferable to exclude a heating device for heating a recording medium where the white ink has been applied between the application of white ink and the application of color ink. Such a heating device is disposed to prevent color bleed and beading attributable to the white ink not drying sufficiently by heating and drying the white ink; however, the ink set of the present disclosure obviates the need for the device because the set can minimize color bleed and beading without it. The heating device includes a roll heater, drum heater, heated wind generator, and heat pressing device.

### Image Forming Method

According to the image forming method, white ink, color ink, and pre-processing fluid can be independently applied by discharging or coating. It is preferable to apply white ink and color ink by discharging and more preferable by inkjetting.

The discharging is not particularly limited and can be suitably selected to suit to a particular application. For example, it is possible to discharge processing fluid by using a piezoelectric element actuator, thermal energy, actuator utilizing an electrostatic force, or a continuous jetting charging control head.

Specific examples of coating include, but are not limited to, blade coating, gravure coating, gravure offset coating, bar coating, roll coating, knife coating, air knife coating, comma coating, U comma coating, AKKU coating, smoothing coating, micro gravure coating, reverse roll coating, four or five roll coating, dip coating, curtain coating, slide coating, and die coating.

The image forming method may furthermore optionally include heating the white ink, color ink, or pre-processing fluid applied to the recording medium. Such heating includes preventing color bleed and beading due to the white ink not drying sufficiently by heating and drying the white ink. However, it is preferable to apply no heat to the recording medium where the white ink has been applied between the application of white ink and the application of color ink because the ink set of the present disclosure can minimize color bleed and beading without heating.

In the image forming method, the time length between the application of white ink to all or part of a recording medium and the application of color ink to the all or part of the recording medium where the white ink has been applied is preferably 20 seconds or less. The time length is for drying the white ink. Normally, it is preferably longer than 20 seconds to minimize color bleed and beading caused by the white ink not drying sufficiently. However, the ink set of the present disclosure can minimize color bleed and beading within 20 seconds.

The amount of white ink applied to a recording medium during the application of white ink significantly varies depending on the type of the recording medium. It is, for example, preferably from 1 to 500 g/m² and more preferably from 5 to 400 g/m² to enhance the image quality and drying property. For fabric, it is preferably from 50 to 500 g/m², more preferably from 1005 to 400 g/m², and furthermore preferably from 150 to 300 g/m².

The amount of color ink applied to a recording medium during the application of color ink significantly varies depending on the type of the recording medium. It is, for example, preferably from 1 to 50 g/m² and more preferably from 5 to 30 g/m². For fabric, it is preferably from 5 to 50 g/m² and more preferably from 10 to 30 g/m².

The amount of pre-processing fluid applied to a recording medium during the application of pre-processing fluid significantly varies depending on the type of the recording medium. It is, for example, preferably from 0.1 to 500 g/m² and more preferably from 1 to 400 g/m² to enhance the image quality and drying property. For fabric, it is preferably from 100 to 500 g/m², more preferably from 200 to 500 g/m², and furthermore preferably from 300 to 400 g/m².

The terms of image forming, recording, and printing in the present disclosure represent the same meaning.

Also, recording media, media, and print substrates in the present disclosure have the same meaning unless otherwise specified.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

Next, the present disclosure is described in detail with reference to Examples but is not limited thereto.

### Preparation Example of Pigment Dispersion

### Preparation Example 1: Preparation of Surface Reformed Black Pigment Dispersion

A total of 100 g of Black Pearls^{registered} 1000 (carbon black having a BET specific surface area of 343 m²/g and an absorbing amount of dibutylphthalate (DBPA) of 105 ml/100g, manufactured by Cabot Corporation), 100 milimole of sulfanilic acid, and 1 litter of highly deionized water were mixed by a Silverson Mixer at 6,000 rpm in a room temperature environment.

Thereafter, 100 milimole of nitric acid was added to the thus-obtained slurry. Thirty minutes later, 100 milimole of sodium nitrite dissolved in a 10 mL of highly deionized water was slowly added to the slurry. Furthermore, the resulting material was heated to 60 degrees C while being stirred to allow reaction for one hour to obtain a reformed pigment in which sulfanilic acid was added to carbon black.

Next, pH of the product was adjusted to 9 with tetrabutyl ammonium hydroxide solution (methanol solution) at 10 percent by mass to obtain a reformed pigment dispersion 30 minutes later. Thereafter, the dispersion obtained and highly deionized water were subjected to ultrafiltering by dialysis membrane followed by ultrasonic dispersion to obtain a surface reformed pigment dispersion having a solid content accounting for 20 percent by mass.

The degree of surface reforming of the thus-obtained surface reformed pigment dispersion was 0.75 mmol/g and the 50 percent cumulative volume particle diameter D₅₀ was 120 nm as measured by a particle size distribution measuring instrument (NANOTRAC UPA-EX150, manufactured by NIKKISO CO., LTD.).

### Preparation Example 2: Preparation of Surface Reformed Magenta Pigment Dispersion

A total of 1 kg of SMART Magenta 3122BA (Pigment Red 122 surface treated dispersion, solid content of 14.5 percent by mass, manufactured by SENSIENT Corporation) was subjected to acid deposition with 0.1 normal HCL aqueous solution.

Next, pH of the product was adjusted to 9 with tetraethyl ammonium hydroxide aqueous solution at 10 percent by mass to obtain a reformed pigment dispersion 30 minutes later. The thus-obtained reformed pigment dispersion containing a pigment bonded to at least one amino benzoate group or amino benzoate tetraethyl ammonium salt was subjected to ultrafiltering by dialysis membrane with highly deionized water, followed by ultrasonic dispersion to obtain a surface reformed magenta pigment dispersion having a pigment solid content of 20 percent by mass.

The surface reformed magenta pigment dispersion had a 50 percent cumulative volume particle diameter D₅₀ of 104 nm as measured by a particle size distribution measuring instrument (NANOTRAC UPA-EX150, manufactured by NIKKISO CO., LTD.).

### Preparation Example 3: Preparation of Surface Reformed Cyan Pigment Dispersion

A total of 1 kg of SMART Cyan 3154BA (Pigment Blue 15:4 surface reformed dispersion, solid portion: 14.5 percent by mass, manufactured by SENSIENT Corporation) was subjected to acid deposition with 0.1 normal HCL aqueous solution.

Next, pH of the product was adjusted to 9 with benzyl trimethyl ammonium hydroxide solution (methanol solution) at 40 percent by mass to obtain a reformed pigment dispersion 30 minutes later. The thus-obtained reformed pigment dispersion including a pigment bonded to at least one amino benzoate group or amino benzoate benzyltrimethyl ammonium salt was subjected to ultrafiltering by dialysis membrane with highly deionized water, followed by ultrasonic dispersion to obtain a surface reformed cyan pigment dispersion having a pigment solid content of 20 percent by mass.

The surface reformed cyan pigment dispersion had a 50 percent cumulative volume particle diameter D₅₀ of 116 nm as measured by a particle size distribution measuring instrument (NANOTRAC UPA-EX150, manufactured by NIKKISO CO., LTD.).

### Preparation Example 4: Preparation of Surface Reformed Yellow Pigment Dispersion

pH of 1 kg of SMART Yellow 3074BA (Pigment Yellow 74 surface treated dispersion, solid content: 14.5 percent by mass, manufactured by SENSIENT Corporation) was adjusted to 9 with tetrabutyl ammonium hydroxide solution (methanol solution) at 10 percent by mass to obtain a reformed pigment dispersion 30 minutes later. The thus-obtained reformed pigment dispersion including a pigment bonded to at least one amino benzoate group or amino benzoate tetrabutyl ammonium salt was subjected to ultrafiltering by dialysis membrane with highly deionized water, followed by ultrasonic dispersion to obtain a surface reformed yellow pigment dispersion having a pigment solid content of 20 percent by mass.

The surface reformed yellow pigment dispersion had a 50 percent cumulative volume particle diameter D₅₀ of 145 nm as measured by a particle size distribution measuring instrument (NANOTRAC UPA-EX150, manufactured by NIKKISO CO., LTD.).

### Preparation Example 5: Preparation of Liquid Dispersion of Polymer Particulate Containing Magenta Pigment

After sufficient replacement with nitrogen gas in a 1 L flask equipped with a mechanical stirrer, a thermometer, a nitrogen gas introducing tube, a reflux tube, and a dripping funnel, 11.2 g of styrene, 2.8 g of acrylic acid, 12.0 g of lauryl methacrylate, 4.0 g of polyethylene glycol methacrylate, 4.0 g of styrene macromer, and 0.4 g of mercapto ethanol were mixed in the flask and heated to 65 degrees C. Next, a liquid mixture of 100.8 g of styrene, 25.2 g of acrylic acid, 108.0 g of lauryl methacrylate, 36.0 g of polyethylene glycol methacrylate, 60.0 g of hydroxyethyl methacrylate, 36.0 g of styrene macromer, 3.6 g of mercapto ethanol, 2.4 g of azobismethyl valeronitrile, and 18 g of methylethyl ketone was added dropwise to the flask in two and a half hours. Subsequently, a liquid mixture of 0.8 g of azobismethyl valeronitrile and 18 g of methyl ethyl ketone was added dropwise to the flask in half an hour. After one-hour stirring at 65 degrees C, 0.8 g of azobismethyl valeronitrile was added followed by stirring for another hour. After the reaction was complete, 364 g of methylethyl ketone was added to the flask to obtain 800 g of a polymer solution A having a concentration of 50 percent by mass.

Next, 28 g of the polymer solution A, 42 g of C.I.Pigment Red 122, 13.6 g of 1 mol/L potassium hydroxide aqueous solution, 20 g of methyl ethyl ketone, and 13.6 g of deionized water were thoroughly stirred followed by kneading using a roll mill to obtain a paste. The obtained paste was placed in 200 g of deionized water followed by sufficiently stirring. Methylethyl ketone and water were distilled away using an evaporator. The thus-obtained liquid dispersion was filtered under pressure with a polyvinylidene fluoride membrane filter having an average pore diameter of 5.0 µm to obtain a liquid dispersion of polymer particulate containing a magenta pigment in an amount of 15 percent by mass at a solid content of 20 percent by mass.

The liquid dispersion of polymer particulates containing a magenta pigment had a 50 percent cumulative volume particle diameter D₅₀ of 127 nm as measured by a particle size distribution measuring instrument (NANOTRAC UPA-EX150, manufactured by NIKKISO CO., LTD.).

### Preparation Example 6: Preparation of Liquid Dispersion of Polymer Particulate Containing Cyan Pigment

Liquid dispersion of polymer particulate containing a cyan pigment was prepared in the same manner as in Preparation Example 5 except that C.I. Pigment red 122 was changed to a phthalocyanine pigment (C.I. Pigment Blue 15:3).

The cumulative average particle diameter D₅₀ of the liquid dispersion obtained was 93 nm as measured by particle size distribution measuring instrument (NANOTRAC UPA-EX150, manufactured by NIKKISO CO., LTD.).

### Preparation Example 7: Preparation of Liquid Dispersion of Polymer Particulate Containing Yellow Pigment

A liquid dispersion of polymer particulates containing a yellow pigment was prepared in the same manner as in Preparation Example 5 except that C.I. Pigment Red 122 was replaced with bisazo yellow pigment (C.I. Pigment Yellow 155).

The liquid dispersion of polymer particulates containing a yellow pigment had a 50 percent cumulative volume particle diameter D₅₀ of 76 nm as measured by a particle size distribution measuring instrument (NANOTRAC UPA-EX150, manufactured by NIKKISO CO., LTD.).

### Preparation Example 8: Preparation of Liquid Dispersion of Polymer Particulate Containing Black Pigment

A liquid dispersion of polymer particulates containing a black pigment was prepared in the same manner as in Preparation Example 5 except that C.I. Pigment Red 122 was changed to carbon black (FW100, manufactured by Degussa AG).

The liquid dispersion of polymer particulates containing a yellow pigment had a 50 percent cumulative volume particle diameter D₅₀ of 104 nm as measured by a particle size distribution measuring instrument (NANOTRAC UPA-EX150, manufactured by NIKKISO CO., LTD.).

### Preparation Example 9: Preparation of Liquid Dispersion of Polymer Containing White Pigment

A total of 55.6 g of copolymer solution of DISPERBYK-2081 (manufactured by BYK Japan), 517 g of titanium oxide (TITONE R-25, manufactured by SAKAI CHEMICAL INDUSTRY CO., LTD.), 50 g of β-methoxy-N,N-dimethyl-propionamide, and 377.4 g of deionized water were sufficiently stirred, placed in a bead mill (DYNO-MILL), and dispersed until the 50 percent cumulative volume particle diameter D₅₀ reached 300 nm or less. This liquid dispersion was filtered with a polyvinylidene fluoride membrane filter having an average pore diameter of 5.0 µm under pressure to remove coarse particles. A liquid dispersion of polymer containing white pigment having a white pigment concentration of 50 percent by mass was obtained.

The cumulative average particle diameter D₅₀ of the liquid dispersion of polymer containing white pigment was 283 nm as measured by particle size distribution measuring instrument (NANOTRAC UPA-EX150, manufactured by NIKKISO CO., LTD.).

### Synthetic Example of Resin Particle

### Synthesis Example 1: Synthesis of Water-dispersible Polyurethane Resin A

A total of 830 parts by mass of terephthalic acid, 830 parts by mass of isophthalic acid, 374 parts by mass of ethylene glycol, 598 parts by mass of neopentyl glycol, and 0.5 parts by mass of dibutyltin oxide were loaded in a reaction container equipped with a thermometer, a nitrogen gas introducing tube, and a stirrer and allowed to conduct polycondensation at 230 degrees C for 15 hours while introducing nitrogen gas into the reaction container until the acid value reached 1 mgKOH/g or less at 180 to 230 degrees C to obtain a polyester polyol P-1 having a hydroxyl value of 74.5 mgKOH/g, an acid value of 0.2 mgKOH/g, and an average molecular weight of 1,500.

A total of 1,660 parts by mass of orthophthalic acid, 1,637 parts by mass of diethylene glycol, and 0.5 parts by mass of dibutyltin oxide were charged in a container equipped with a thermometer, a nitrogen gas introducing tube, and a stirrer and allowed to conduct polycondensation reaction at 230 degrees C for 15 hours while introducing nitrogen gas into the reaction container until the acid value was 1 mgKOH/mg or less at 180 to 230 degrees C to obtain a polyester polyol Q-1 having an aromatic ring structure with a hydroxyl value of 190 mgKOH/g and an acid value of 0.3 mgKOH/g.

Next, 1,000 parts by mass of polyester polyol P-1 obtained was subjected to dehydration at 100 degrees with a reduced pressure. Subsequent to cooling down to 80 degrees C, 907 parts by mass of methylethyl ketone was added followed by sufficient stirring to obtain a solution. Thereafter, 80 parts by mass of 2,2'-dimethylol propionic acid was added to the solution. Next, 281 parts by mass of isophorone diisocyanate was added to allow reaction at 75 degrees C for eight hours to complete urethanation. After the isocyanate value reached 0.1 percent or less, the mixture was cooled down to 50 degrees C and 340 parts of the polyester polyol Q-1 was added to obtain a homogeneous solution. After 60 parts by mass of triethyl amine was added for neutralization, 7,000 parts by mass of water was added to obtain an aqueous solution. After methyl ethyl ketone was removed from the obtained transparent reaction product under a reduced pressure at a temperature range of from 40 to 60 degrees C, water was added to adjust the concentration to obtain a water dispersion containing a stable translucent colloidal water-dispersible polyurethane resin A having a nonvolatile content of 30 percent by mass. The water-dispersible polyurethane resin A has a structure represented by the Chemical Structure (A) illustrated above.

### Synthesis Example 2: Synthesis of Water-dispersible Polyurethane Resin B

Next, 1,000 parts by mass of the polyester polyol P-1 obtained in the same manner as in Synthesis Example 1 was subjected to dehydration at 100 degrees with a reduced pressure. Subsequent to cooling down to 80 degrees C, 907 parts by mass of methyl ethyl ketone was added followed by sufficient stirring to obtain a solution. Thereafter, 80 parts by mass of 2,2'-dimethylol propionic acid was added to the solution.

Next, 281 parts by mass of isophorone diisocyanate was added to allow reaction at 75 degrees C for eight hours to complete urethanation. After the isocyanate value reached 0.1 percent by mass or less, the mixture was cooled down to 50 degrees C. After 60 parts by mass of triethyl amine was added for neutralization, 7,000 parts by mass of water was added to obtain an aqueous solution. After methyl ethyl ketone was removed from the obtained transparent reaction product under a reduced pressure at a temperature range of from 40 to 60 degrees C, water was added to adjust the concentration to obtain a water dispersion containing a stable translucent colloidal water-dispersible polyurethane resin B having a nonvolatile content of 30 percent by mass. The water-dispersible polyurethane resin B has a structure represented by the Chemical Structure (A) illustrated above.

### Synthesis Example 3: Synthesis of Water-dispersible Polyurethane Resin C

A total of 664 parts by mass of terephthalic acid, 631 parts by mass of isophthalic acid, 472 parts by mass of 1,4-butanediol, 447 parts by mass of neopentyl glycol, and 0.5 parts by mass of dibutyltin oxide were loaded in a reaction container equipped with a thermometer, a nitrogen gas introducing tube, and a stirrer and allowed to react at 180 to 230 degrees C for five hours for esterification while introducing nitrogen gas into the reaction container followed by polycondensation reaction at 230 degrees C for six hours until the acid value reached 1 mgKOH/g or less. Thereafter, the resulting solution was cooled down to 120 degrees C. A total of 321 parts by mass of adipic acid and 268 parts by mass of 2,2'-dimethylol propionic acid were added thereto followed by heating again to 170 degrees C to allow reaction at this temperature for 20 hours to obtain a polyester polyol P-2 having a carboxyl group having an acid value of 46.5 mgKOH/g and a hydroxyl value of 59.8 mgKOH/g.

A thousand parts of polyester polyol P-2 obtained was subjected to dehydration at 100 degrees with a reduced pressure. Subsequent to cooling down to 80 degrees C, 812 parts by mass of methylethyl ketone was added followed by sufficient stirring to obtain a solution. Thereafter, 20 parts of 1,4-butane diol was added to the solution. Next, 198 parts by mass of dicyclohexyl methane-4,4'-diisocyanate (hydrogenated MDI) was added to allow reaction at 75 degrees C for eight hours. After the isocyanate value reached 0.1 percent by mass or less, the mixture was cooled down to 50 degrees C. After 84 parts by mass of triethyl amine was added for neutralization, 7,000 parts by mass of water was added to obtain an aqueous solution. After methyl ethyl ketone was removed from the obtained transparent reaction product under a reduced pressure at a temperature range of from 40 to 60 degrees C, water was added to adjust the concentration to obtain a water dispersion containing a stable translucent colloidal water-dispersible polyurethane resin C having a nonvolatile content of 30 percent by mass. The water-dispersible polyurethane resin C has a structure represented by the Chemical Structure (A) illustrated above.

### Synthesis Example 4: Synthesis of Water-dispersible Polyurethane Resin D

Next, 1,000 parts by mass of the polyester polyol P-1 obtained in the same manner as in Synthesis Example 1 was subjected to dehydration at 100 degrees with a reduced pressure. Subsequent to cooling down to 80 degrees C, 907 parts by mass of methyl ethyl ketone was added followed by sufficient stirring to obtain a solution. Thereafter, 80 parts by mass of 2,2'-dimethylol propionic acid was added to the solution.

Next, 281 parts by mass of isophorone diisocyanate was added to allow reaction at 75 degrees C for eight hours to complete urethanation. After the isocyanate value reached 0.1 percent by mass or less, the mixture was cooled down to 50 degrees C. After 60 parts by mass of triethyl amine was added for neutralization, 7,000 parts by mass of water was added to obtain an aqueous solution. After methyl ethyl ketone was removed from the obtained transparent reaction product under a reduced pressure at a temperature range of from 40 to 60 degrees C, water was added to adjust the concentration to obtain a water dispersion containing a stable translucent colloidal water-dispersible polyurethane resin D having a nonvolatile content of 30 percent by mass. The water-dispersible polyurethane resin D has a structure represented by the Chemical Structure (A) illustrated above.

### Synthesis Example 5: Synthesis of Acrylic-Silicone Resin

After sufficient replacement with nitrogen gas in a flask (1 L) equipped with a mechanical stirrer, a thermometer, a nitrogen gas introducing tube, a reflux tube, and a dripping funnel, 8.0 g of LATEMUL S-180 (reactive anionic surfactant, manufactured by Kao Corporation) was admixed with 350 g of deionized water and heated to 65 degrees C. Thereafter, 3.0 g of t-butylperoxy benzoate serving as reaction initiator and 1.0 g of sodium isoascorbiate were added to the mixture. Five minutes later, a mixture of 45 g of methylmethacrylate, 160 g of methacrylic acid-2-ethylhexyl, 5 g of acrylic acid, 45 g of butyl methacrylate, 30 g of cyclohexyl methacrylate, 15 g of vinyltriethoxysilane, 8.0 g of LATEMUL S-180, and 340 g of deionized water were dripped in the flask in three hours. Subsequent to heating at 80 degrees C for two-hour aging, the resulting matter was cooled down to room temperature. pH of the resulting matter was adjusted to 7 to 8 by sodium hydroxide. Thereafter, ethanol was distilled away by an evaporator followed by moisture adjustment to obtain 730 g of a water dispersion containing acrylic-silicone resin particle having a solid content of 40 percent by mass. In addition, the 50 percent cumulative volume particle diameter D₅₀ of the resin particle in the water dispersion was 125 nm as measured by a particle size distribution measuring instrument (NANOTRAC UPA-EX150, manufactured by NIKKISO CO., LTD.).

### Manufacturing Example of White Ink and Color Ink

### Manufacturing Example 1: Manufacturing of Ink 1

A total of 1.00 parts by mass of 2-ethyl-1,3-hexane diol, 22.00 parts by mass of glycerin, 11.00 parts by mass of 1,3-butane diol, 0.320 parts by mass of 2,5,8,11-tetramethyl decane-5,8-diol, and 0.08 parts by mass of UNIDYNE^{trademark} DSN403N were mixed and stirred in a container equipped with a stirrer for 30 minutes. Thereafter, 0.05 parts by mass of preservatives and fungicides (Proxel GXL, manufactured by Avecia Inkjet Limited), 0.30 parts by mass of 2-amino-2-ethyl-1,3-propane diol, 40.00 parts by mass of the liquid dispersion of polymer particulate containing magenta pigment of Preparation Example 5, 20.00 parts by mass of the water dispersion of water-dispersible polyurethane resin A of Synthesis Example 1, and a balance of highly pure water to make the total 100 parts were added to the mixture followed by mixing and stirring for 60 minutes. Thereafter, the thus-obtained mixture was filtered with a polyvinilydene fluoride membrane filter having an average pore diameter of 1.2 µm under pressure to remove coarse particles and dust. Thus, ink 1 was obtained.

### Manufacturing Examples 2 to 45: Ink 2 to 45

Inks 2 to 45 were obtained in the same manner as in Manufacturing Example 1 except that the prescription of ink was changed to those shown in Tables 1 to 9. The content of each material is represented in percent by mass in Tables 1 to 9 below. It does not represent the content of solid portion or effective component but all included.

### The details of each material shown in Tables 1 to 9 below are as follows.

### Coloring Agent

· AC-RW7: White pigment liquid dispersion, pigment solid content of 45.3 percent by mass, manufactured by Dainichiseika Color & Chemicals Mfg. Co., Ltd.

### Resin

· SUPERFLEX^{registered} 300: Polyurethane resin dispersion (solid content: 33.0 percent by mass, glass transition temperature (Tg): -42 degrees C, manufactured by DKS Co., Ltd.)
· TAKELAC^{trademark} W-6110: Polyurethane resin dispersion, solid content of 33.4 percent by mass, glass transition temperature (Tg) of -20 degrees C, manufactured by Mitsui Chemicals, Inc.

### Surfactant

· TEGO Wet 270: Polyether-modified siloxane compound, effective component of 100 percent, manufactured by Evonik Industries AG
· SILFACE SAG503A: Polyether-modified siloxane compound, effective component of 100 percent, manufactured by Nisshin Chemical Co., Ltd.
· Surfynol 104E: effective component of 50 percent, manufactured by Nissin Chemical Co., Ltd.
· UNIDYNE^{trademark} DSN403N: Polyoxyethylene perfluoroalkyl ether, effective component of 100 percent by mass, manufactured by DAIKIN INDUSTRIES, Ltd.

### Mildew-proofing Agent

· PROXEL GXL: mildew-proofing agent mainly composed of 1,2-benzisothiazolin-3-one, component of 20 percent, containing dipropylene glycol, manufactured by Avecia Inkjet Limited

**Table 1**

| | | Ink | | | | |
|---|---|---|---|---|---|---|
| | | 1 | 2 | 3 | 4 | 5 |
| | Preparation Example 1: Surface-modified black pigment dispersion, pigment solid content of 20 percent by mass | | | | | |
| Coloring material | Preparation Example 2: Surface-modified magenta pigment dispersion, pigment solid content of 20 percent by mass | | | | | |
| | Preparation Example 3: Surface-modified cyan pigment dispersion, pigment solid content of 20 percent by mass Preparation Example 4: Surface-modified yellow pigment dispersion, pigment solid content of 20 percent by mass | | | | | |
| | Preparation Example 5: Liquid dispersion of polymer particulate containing magenta pigment, pigment solid content of 15 percent by mass | 40.00 | | | | |
| | Preparation Example 6: Liquid dispersion of polymer particulate containing cyan pigment, pigment solid content of 15 percent by mass | | 26.67 | | | |
| | Preparation Example 7: Liquid dispersion of polymer particulate containing yellow pigment, pigment solid content of 15 percent by mass | | | 26.67 | | |
| | Preparation Example 8: Liquid dispersion of polymer particulate containing black pigment, pigment solid content of 15 percent by mass | | | | 40.00 | |
| | Preparation Example 9: Liquid dispersion of polymer containing white pigment, pigment solid content of 50 percent by mass | | | | | 16.00 |
| | White pigment liquid dispersion (AC-RW7, solid content of 45.3 percent by mass | | | | | |
| Resin having Chemical Structure (A) | Synthesis Example 1: water-dispersible polyurethane resin A, solid content of resin of 30 percent by mass | 20.00 | 26.67 | 26.67 | 20.00 | 26.67 |
| | Synthesis Example 2: water-dispersible polyurethane resin B, solid content of resin of 30 percent by mass | | | | | |
| | Synthesis Example 3: water-dispersible polyurethane resin C, solid content of resin of 30 percent by mass | | | | | |
| | Synthesis Example 4: water-dispersible polyurethane resin D, solid content of resin of 30 percent by mass | | | | | |
| Other resin | SUPERFLEX^{registred} 300 (polyurethane dispersion, solid content of resin of 33.0 percent by mass) | | | | | |
| | TAKELAC^{trademark} W-6110 (polyurethane dispersion, solid content of resin of 33.4 percent by mass) | | | | | |
| | Synthesis Example 5: Acrylic-silicone resin, solid content of resin of 40 percent by mass | | | | | |
| Organic solvent, SP value of from 9.0 to 11.8 | 3-methoxy-N,N-dimethyl propanamide, SP value of 9.19 | | | | | |
| | 3-methoxy-3-methyl-1-butanol, SP value of 9.64 | | | | | |
| | 2-ethyl-1,3-hexane diol, SP value of 10.6 | 1.00 | 1.00 | 1.00 | 1.00 | 1.00 |
| | 2,2,4-Trimethyl-1,3-pentane diol, SP value of 10.8 | | | | | |
| Other organic solvent | Glycerin, SP value of 16.38 | 22.00 | 24.00 | 26.00 | 21.00 | 20.00 |
| | 1,3-butane diol, SP value of 13.78 | 11.00 | 12.00 | 13.00 | | 10.00 |
| | 3-methyl-1,3-butane diol, SP value of 12.05 | | | | 10.50 | |
| | Propylene glycol, SP value of 13.72 | | | | | |
| Surfactant | Polyether-modified siloxane compound of Chemical Structure (2) | | | | | |
| | TEGO Wet 270 | | | | | |
| | SILFACE SAG503A | | | | | |
| | Surfynol 104E, effective component of 50 percent | | | | | |
| | UNIDYNE^{trademark} DSN403N | 0.080 | 0.080 | 0.082 | 0.040 | 0.080 |
| Mildew-proofing agent | Proxel GXL | 0.05 | 0.05 | 0.05 | 0.05 | 0.05 |
| Foam Inhibitor (Defoaming Agent) | 2,4,7,9-tetramethyl decane-4,7-diol | | | | | |
| | 2,5,8,11-tetramethyl dodecane-5,8-diol | 0.320 | 0.320 | 0.328 | 0.160 | 0.320 |
| pH regulator | 2-amino-2-ethyl-1,3-propane diol | 0.30 | 0.30 | 0.30 | 0.40 | 0.30 |
| Water | Pure water | Balance | Balance | Balance | Balance | Balance |
| Total mass | | 100 | 100 | 100 | 100 | 100 |

**Table 2**

| | | Ink | | | | |
|---|---|---|---|---|---|---|
| | | 6 | 7 | 8 | 9 | 10 |
| | Preparation Example 1: Surface-modified black pigment dispersion, pigment solid content of 20 percent by mass | | | | 15.00 | |
| Coloring material | Preparation Example 2: Surface-modified magenta pigment dispersion, pigment solid content of 20 percent by mass | 15.00 | | | | |
| | Preparation Example 3: Surface-modified cyan pigment dispersion, pigment solid content of 20 percent by mass | | 15.00 | | | |
| | Preparation Example 4: Surface-modified yellow pigment dispersion, pigment solid content of 20 percent by mass | | | 15.00 | | |
| | Preparation Example 5: Liquid dispersion of polymer particulate containing magenta pigment, pigment solid content of 15 percent by mass | | | | | |
| | Preparation Example 6: Liquid dispersion of polymer particulate containing cyan pigment, pigment solid content of 15 percent by mass | | | | | |
| | Preparation Example 7: Liquid dispersion of polymer particulate containing yellow pigment, pigment solid content of 15 percent by mass | | | | | |
| | Preparation Example 8: Liquid dispersion of polymer particulate containing black pigment, pigment solid content of 15 percent by mass | | | | | |
| | Preparation Example 9: Liquid dispersion of polymer containing white pigment, pigment solid content of 50 percent by mass | | | | | 16.00 |
| | White pigment liquid dispersion (AC-RW7, solid content of 45.3 percent by mass | | | | | |
| Resin having Chemical Structure (A) | Synthesis Example 1: water-dispersible polyurethane resin A, solid content of resin of 30 percent by mass | | | | | |
| | Synthesis Example 2: water-dispersible polyurethane resin B, solid content of resin of 30 percent by mass | 14.17 | 14.17 | 14.17 | 14.17 | 14.17 |
| | Synthesis Example 3: water-dispersible polyurethane resin C, solid content of resin of 30 percent by mass | 14.17 | 14.17 | 14.17 | 14.17 | 14.17 |
| | Synthesis Example 4: water-dispersible polyurethane resin D, solid content of resin of 30 percent by mass | | | | | |
| Other resin | SUPERFLEX^{registered} 300 (polyurethane dispersion, solid content of resin of 33.0 percent by mass) | | | | | |
| | TAKELAC^{trademark} W-6110 (polyurethane dispersion, solid content of resin of 33.4 percent by mass) | | | | | |
| | Synthesis Example 5: Acrylic-silicone resin, solid content of resin of 40 percent by mass | | | | | |
| Organic solvent, SP value of from 9.0 to 11.8 | 3-methoxy-N,N-dimethyl propanamide, SP value of 9.19 | 9.00 | 9.00 | 9.00 | 9.00 | 9.00 |
| | 3-methoxy-3-methyl-1-butanol, SP value of 9.64 | 4.00 | 4.00 | 4.00 | 4.00 | 4.00 |
| | 2-ethyl-1,3-hexanediol, SP value of 10.6 | 2.00 | 2.00 | 2.00 | 2.00 | 2.00 |
| | 2,2,4-trimethyl-1,3-pentanediol, SP value of 10.8 | | | | | |
| Other organic solvent | Glycerin, SP value of 16.38 | | | | | |
| | 1,3-butane diol, SP value of 13.78 | | | | | |
| | 3-methyl-1,3-butane diol, SP value of 12.05 | | | | | |
| | Propylene glycol, SP value of 13.72 | 15.00 | 14.80 | 15.50 | 16.00 | 15.50 |
| Surfactant | Polyether-modified siloxane compound of Chemical Structure (2) | | | | | |
| | TEGO Wet | 1.20 | 1.20 | 1.20 | 1.20 | 1.20 |
| | SILFACE SAG503A | 1.60 | 1.60 | 1.60 | 1.60 | 1.60 |
| | Surfynol 104E, effective component of 50 percent | | | | | |
| | UNIDYNE^{trademark} DSN403N | | | | | |
| Mildew-proofing agent | Proxel GXL | 0.05 | 0.05 | 0.05 | 0.05 | 0.05 |
| Foam inhibitor (defoaming agent) | 2,4,7,9-tetramethyl decane-4,7-diol | 0.40 | 0.40 | 0.40 | 0.40 | 0.40 |
| | 2,5,8,11-tetramethyl dodecane-5,8-diol | | | | | |
| pH regulator | 2-amino-2-ethyl-1,3-propane diol | 0.20 | 0.20 | 0.20 | 0.20 | 0.30 |
| Water | Pure water | Balance | Balance | Balance | Balance | Balance |
| Total mass | | 100 | 100 | 100 | 100 | 100 |

**Table 3**

| | | Ink | | | | |
|---|---|---|---|---|---|---|
| | | 11 | 12 | 13 | 14 | 15 |
| | Preparation Example 1: Surface-modified black pigment dispersion, pigment solid content of 20 percent by mass | | | | | |
| Coloring material | Preparation Example 2: Surface-modified magenta pigment dispersion, pigment solid content of 20 percent by mass | | | | | |
| | Preparation Example 3: Surface-modified cyan pigment dispersion, pigment solid content of 20 percent by mass | | | | | |
| | Preparation Example 4: Surface-modified yellow pigment dispersion, pigment solid content of 20 percent by mass | | | | | |
| | Preparation Example 5: Liquid dispersion of polymer particulate containing magenta pigment, pigment solid content of 15 percent by mass | 26.67 | | | | |
| | Preparation Example 6: Liquid dispersion of polymer particulate containing cyan pigment, pigment solid content of 15 percent by mass | | 26.67 | | | |
| | Preparation Example 7: Liquid dispersion of polymer particulate containing yellow pigment, pigment solid content of 15 percent by mass | | | 26.67 | | |
| | Preparation Example 8: Liquid dispersion of polymer particulate containing black pigment, pigment solid content of 15 percent by mass | | | | 33.33 | |
| | Preparation Example 9: Liquid dispersion of polymer containing white pigment, pigment solid content of 50 percent by mass | | | | | |
| | White pigment liquid dispersion (AC-RW7, solid content of 45.3 percent by mass | | | | | 17.66 |
| Resin having Chemical Structure (A) | Synthesis Example 1: water-dispersible polyurethane resin A, solid content of resin of 30 percent by mass | | | | | |
| | Synthesis Example 2: water-dispersible polyurethane resin B, solid content of resin of 30 percent by mass | | | | | |
| | Synthesis Example 3: water-dispersible polyurethane resin C, solid content of resin of 30 percent by mass | | | | | |
| | Synthesis Example 4: water-dispersible polyurethane resin D, solid content of resin of 30 percent by mass | | | | | |
| Other resin | SUPERFLEX^{registered} 300 (polyurethane dispersion, solid content of resin of 33.0 percent by mass) | | | | | |
| | TAKELAC^{trademark} W-6110 (polyurethane dispersion, solid content of resin of 33.4 percent by mass) | 35.93 | 35.93 | 35.93 | 35.93 | 29.94 |
| | Synthesis Example 5: Acrylic-silicone resin, solid content of resin of 40 percent by mass | | | | | |
| Organic solvent, SP value of from 9.0 to 11.8 | 3-methoxy-N,N-dimethyl propanamide, SP value of 9.19 | | | | | |
| | 3-methoxy-3-methyl-1-butanol, SP value of 9.64 | | | | | |
| | 2-Ethyl-1,3-hexanediol, SP value of 10.6 | 2.00 | 2.00 | 2.00 | 2.00 | 2.00 |
| | 2,2,4-trimethyl-1,3-pentane diol, SP value of 10.8 | | | | | |
| Other organic solvent | Glycerin, SP value of 16.38 | 27.00 | 27.50 | 22.00 | 20.00 | 23.00 |
| | 1,3-butane diol, SP value of 13.78 | | | | | |
| | 3-methyl-1,3-butane diol, SP value of 12.05 | 5.00 | 5.00 | 10.00 | 7.50 | 10.00 |
| | Propylene glycol, SP value of 13.72 | | | | | |
| Surfactant | Polyether-modified siloxane compound of Chemical Structure (2) | | | | | |
| | TEGO Wet 270 | | | | | |
| | SILFACE SAG503A | 0.40 | 0.40 | 0.50 | 0.30 | 0.60 |
| | Surfynol 104E, effective component of 50 percent | | | | | |
| | UNIDYNE^{trademark} DSN403N | | | | | |
| Mildew-proofing agent | Proxel GXL | 0.05 | 0.05 | 0.05 | 0.05 | 0.05 |
| Foam Inhibitor (Defoaming Agent) | 2,4,7,9-tetramethyl decane-4,7-diol | | | | | |
| | 2,5,8,11-tetramethyl dodecane-5,8-diol | 0.50 | 0.50 | 0.50 | 0.50 | 0.30 |
| pH regulator | 2-amino-2-ethyl-1,3-propane diol | 0.20 | 0.20 | 0.20 | 0.20 | 0.20 |
| Water | Pure water | Balance | Balance | Balance | Balance | Balance |
| Total mass | | 100 | 100 | 100 | 100 | 100 |

**Table 4**

| | | Ink | | | | |
|---|---|---|---|---|---|---|
| | | 16 | 17 | 18 | 19 | 20 |
| | Preparation Example 1: Surface-modified black pigment dispersion, pigment solid content of 20 percent by mass | | | | | |
| Coloring material | Preparation Example 2: Surface-modified magenta pigment dispersion, pigment solid content of 20 percent by mass | | | | | |
| | Preparation Example 3: Surface-modified cyan pigment dispersion, pigment solid content of 20 percent by mass | | | | | |
| | Preparation Example 4: Surface-modified yellow pigment dispersion, pigment solid content of 20 percent by mass | | | | | |
| | Preparation Example 5: Liquid dispersion of polymer particulate containing magenta pigment, pigment solid content of 15 percent by mass | 26.67 | | | | |
| | Preparation Example 6: Liquid dispersion of polymer particulate containing cyan pigment, pigment solid content of 15 percent by mass | | 26.67 | | | |
| | Preparation Example 7: Liquid dispersion of polymer particulate containing yellow pigment, pigment solid content of 15 percent by mass | | | 26.67 | | |
| | Preparation Example 8: Liquid dispersion of polymer particulate containing black pigment, pigment solid content of 15 percent by mass | | | | 33.33 | |
| | Preparation Example 9: Liquid dispersion of polymer containing white pigment, pigment solid content of 50 percent by mass | | | | | 16.00 |
| | White pigment liquid dispersion (AC-RW7, solid content of 45.3 percent by mass | | | | | |
| Resin having Chemical Structure (A) | Synthesis Example 1: water-dispersible polyurethane resin A, solid content of resin of 30 percent by mass | | | | | |
| | Synthesis Example 2: water-dispersible polyurethane resin B, solid content of resin of 30 percent by mass | | | | | |
| | Synthesis Example 3: water-dispersible polyurethane resin C, solid content of resin of 30 percent by mass | | | | | |
| | Synthesis Example 4: water-dispersible polyurethane resin D, solid content of resin of 30 percent by mass | 33.33 | 33.33 | 33.33 | 33.33 | 33.33 |
| Other resin | SUPERFLEX^{registered} 300 (polyurethane dispersion, solid content of resin of 33.0 percent by mass) | | | | | |
| | TAKELAC^{trademark} W-6110 (polyurethane dispersion, solid content of resin of 33.4 percent by mass) | | | | | |
| | Synthesis Example 5: Acrylic-silicone resin, solid content of resin of 40 percent by mass | | | | | |
| Organic solvent, SP value of from 9.0 to 11.8 | 3-methoxy-N,N-dimethyl propanamide, SP value of 9.19 | | | | | |
| | 3-methoxy-3-methyl-1-butanol, SP value of 9.64 | | | | | |
| | 2-Ethyl-1,3-hexanediol, SP value of 10.6 | | | | | |
| | 2,2,4-trimethyl-1,3-pentane diol, SP value of 10.8 | 2.00 | 2.00 | 2.00 | 2.00 | 2.00 |
| Other organic solvent | Glycerin, SP value of 16.38 | 26.50 | 27.00 | 27.00 | 19.50 | 24.99 |
| | 1,3-butane diol, SP value of 13.78 | | | | | |
| | 3-methyl-1,3-butane diol, SP value of 12.05 | 5.00 | 5.00 | 5.00 | 7.50 | 5.00 |
| | Propylene glycol, SP value of 13.72 | | | | | |
| Surfactant | Polyether-modified siloxane compound of Chemical Structure (2) | 0.50 | 0.50 | 0.50 | 0.50 | 0.30 |
| | TEGO Wet 270 | | | | | |
| | SILFACE SAG503A | | | | | |
| | Surfynol 104E, effective component of 50 percent | | | | | |
| | UNIDYNE^{trademark} DSN403N | | | | | |
| Mildew-proofing agent | Proxel GXL | 0.05 | 0.05 | 0.05 | 0.05 | 0.05 |
| Foam Inhibitor (Defoaming Agent) | 2,4,7,9-tetramethyl decane-4,7-diol | 0.50 | 0.50 | 0.50 | 0.50 | 0.30 |
| | 2,5,8,11-tetramethyl dodecane-5,8-diol | | | | | |
| pH regulator | 2-amino-2-ethyl-1,3-propane diol | 0.20 | 0.20 | 0.20 | 0.20 | 0.20 |
| Water | Pure water | Balance | Balance | Balance | Balance | Balance |
| Total mass | | 100 | 100 | 100 | 100 | 100 |

**Table 5**

| | | Ink | | | | |
|---|---|---|---|---|---|---|
| | | 21 | 22 | 23 | 24 | 25 |
| Coloring material | Preparation Example 1: Surface-modified black pigment dispersion, pigment solid content of 20 percent by mass | | | | | |
| | Preparation Example 2: Surface-modified magenta pigment dispersion, pigment solid content of 20 percent by mass | | | | | |
| | Preparation Example 3: Surface-modified cyan pigment dispersion, pigment solid content of 20 percent by mass | | | | | |
| | Preparation Example 4: Surface-modified yellow pigment dispersion, pigment solid content of 20 percent by mass | | | | | |
| | Preparation Example 5: Liquid dispersion of polymer particulate containing magenta pigment, pigment solid content of 15 percent by mass | 26.67 | | | | |
| | Preparation Example 6: Liquid dispersion of polymer particulate containing cyan pigment, pigment solid content of 15 percent by mass | | 23.33 | | | |
| | Preparation Example 7: Liquid dispersion of polymer particulate containing yellow pigment, pigment solid content of 15 percent by mass | | | 26.67 | | |
| | Preparation Example 8: Liquid dispersion of polymer particulate containing black pigment, pigment solid content of 15 percent by mass | | | | 33.33 | |
| | Preparation Example 9: Liquid dispersion of polymer containing white pigment, pigment solid content of 50 percent by mass | | | | | |
| | White pigment liquid dispersion (AC-RW7, solid content of 45.3 percent by mass | | | | | 22.08 |
| Resin having Chemical Structure (A) | Synthesis Example 1: water-dispersible polyurethane resin A, solid content of resin of 30 percent by mass | | | | | |
| | Synthesis Example 2: water-dispersible polyurethane resin B, solid content of resin of 30 percent by mass | | | | | |
| | Synthesis Example 3: water-dispersible polyurethane resin C, solid content of resin of 30 percent by mass | | | | | |
| | Synthesis Example 4: water-dispersible polyurethane resin D, solid content of resin of 30 percent by mass | | | | | |
| Other resin | SUPERFLEX^{registered} 300 (polyurethane dispersion, solid content of resin of 33.0 percent by mass) | | | | | |
| | TAKELAC^{trademark} W-6110 (polyurethane dispersion, solid content of resin of 33.4 percent by mass) | 35.93 | 35.93 | 35.93 | 35.93 | 29.94 |
| | Synthesis Example 5: Acrylic-silicone resin, solid content of resin of 40 percent by mass | | | | | |
| Organic solvent, SP value of from 9.0 to 11.8 | 3-methoxy-N,N-dimethyl propanamide, SP value of 9.19 | | | | | |
| | 3-methoxy-3-methyl-1-butanol, SP value of 9.64 | | | | | |
| | 2-ethyl-1,3-hexanediol, SP value of 10.6 | | | | | |
| | 2,2,4-trimethyl-1,3-pentanediol, SP value of 10.8 | | | | | |
| Other organic solvent | Glycerin, SP value of 16.38 | 21.55 | 20.00 | 21.00 | 20.00 | 19.30 |
| | 1,3-butane diol, SP value of 13.78 | | | | | |
| | 3-methyl-1,3-butane diol, SP value of 12.05 | 10.00 | 10.00 | 10.00 | 7.50 | 10.00 |
| | Propylene glycol, SP value of 13.72 | | | | | |
| Surfactant | Polyether-modified siloxane compound of Chemical Structure (2) | | | | | |
| | TEGO Wet 270 | | | | | |
| | SILFACE SAG503A | 0.45 | 0.60 | 0.55 | 0.30 | 0.50 |
| | Surfynol 104E, effective component of 50 percent | | | | | |
| | UNIDYNE^{trademark} DSN403N | | | | | |
| Mildew-proofing agent | Proxel GXL | 0.05 | 0.05 | 0.05 | 0.05 | 0.05 |
| Foam Inhibitor (Defoaming Agent) | 2,4,7,9-tetramethyl decane-4,7-diol | 0.40 | 0.40 | 0.40 | 0.40 | 0.40 |
| | 2,5,8,11-tetramethyl dodecane-5,8-diol | | | | | |
| pH regulator | 2-amino-2-ethyl-1,3-propane diol | 0.20 | 0.20 | 0.20 | 0.25 | 0.20 |
| Water | Pure water | Balance | Balance | Balance | Balance | Balance |
| Total mass | | 100 | 100 | 100 | 100 | 100 |

**Table 6**

| | | Ink | | | | |
|---|---|---|---|---|---|---|
| | | 26 | 27 | 28 | 29 | 30 |
| Coloring material | Preparation Example 1: Surface-modified black pigment dispersion, pigment solid content of 20 percent by mass | | | | | |
| | Preparation Example 2: Surface-modified magenta pigment dispersion, pigment solid content of 20 percent by mass | | | | | |
| | Preparation Example 3: Surface-modified cyan pigment dispersion, pigment solid content of 20 percent by mass | | | | | |
| | Preparation Example 4: Surface-modified yellow pigment dispersion, pigment solid content of 20 percent by mass | | | | | |
| | Preparation Example 5: Liquid dispersion of polymer particulate containing magenta pigment, pigment solid content of 15 percent by mass | 26.67 | | | | |
| | Preparation Example 6: Liquid dispersion of polymer particulate containing cyan pigment, pigment solid content of 15 percent by mass | | 26.67 | | | |
| | Preparation Example 7: Liquid dispersion of polymer particulate containing yellow pigment, pigment solid content of 15 percent by mass | | | 26.67 | | |
| | Preparation Example 8: Liquid dispersion of polymer particulate containing black pigment, pigment solid content of 15 percent by mass | | | | 33.33 | |
| | Preparation Example 9: Liquid dispersion of polymer containing white pigment, pigment solid content of 50 percent by mass | | | | | |
| | White pigment liquid dispersion (AC-RW7, solid content of 45.3 percent by mass | | | | | 22.08 |
| Resin having Chemical Structure (A) | Synthesis Example 1: water-dispersible polyurethane resin A, solid content of resin of 30 percent by mass | | | | | |
| | Synthesis Example 2: water-dispersible polyurethane resin B, solid content of resin of 30 percent by mass | | | | | |
| | Synthesis Example 3: water-dispersible polyurethane resin C, solid content of resin of 30 percent by mass | | | | | |
| | Synthesis Example 4: water-dispersible polyurethane resin D, solid content of resin of 30 percent by mass | | | | | |
| Other resin | SUPERFLEX^{registered} 300 (polyurethane dispersion, solid content of resin of 33.0 percent by mass) | 36.36 | 36.36 | 36.36 | 36.36 | 36.36 |
| | TAKELAC^{trademark} W-6110 (polyurethane dispersion, solid content of resin of 33.4 percent by mass) | | | | | |
| | Synthesis Example 5: Acrylic-silicone resin, solid content of resin of 40 percent by mass | | | | | |
| Organic solvent, SP value of from 9.0 to 11.8 | 3-methoxy-N,N-dimethyl propanamide, SP value of 9.19 | | | | | |
| | 3-methoxy-3-methyl-1-butanol, SP value of 9.64 | | | | | |
| | 2-ethyl-1,3-hexanediol, SP value of 10.6 | | | | | |
| | 2,2,4-trimethyl-1,3-pentane diol, SP value of 10.8 | 2.00 | 3.00 | 3.00 | 2.00 | 2.00 |
| Other organic solvent | Glycerin, SP value of 16.38 | 25.00 | 25.00 | 25.00 | 25.00 | 25.00 |
| | 1,3-butane diol, SP value of 13.78 | | | | | |
| | 3-methyl-1,3-butane diol, SP value of 12.05 | | | | | |
| | Propylene glycol, SP value of 13.72 | 5.00 | 5.00 | 5.00 | 2.00 | 5.00 |
| Surfactant | Polyether-modified siloxane compound of Chemical Structure (2) | | | | | |
| | TEGO Wet270 | | | | | |
| | SILFACE SAG503A | | | | | |
| | Surfynol 104E, effective component of 50 percent | 0.50 | 0.50 | 0.55 | 0.50 | |
| | UNIDYNE^{trademark} DSN403N | | | | | 0.02 |
| Mildew-proofing agent | Proxel GXL | 0.05 | 0.05 | 0.05 | 0.05 | 0.05 |
| Foam Inhibitor (Defoaming Agent) | 2,4,7,9-tetramethyl decane-4,7-diol | 0.10 | 0.10 | 0.10 | 0.10 | |
| | 2,5,8,11-tetramethyl dodecane-5,8-diol | | | | | |
| pH regulator | 2-amino-2-ethyl-1,3-propane diol | | | | | |
| Water | Pure water | Balance | Balance | Balance | Balance | Balance |
| Total mass | | 100 | 100 | 100 | 100 | 100 |

**Table 7**

| | | Ink | | | | |
|---|---|---|---|---|---|---|
| | | 31 | 32 | 33 | 34 | 35 |
| | Preparation Example 1: Surface-modified black pigment dispersion, pigment solid content of 20 percent by mass | | | | 25.00 | |
| Coloring material | Preparation Example 2: Surface-modified magenta pigment dispersion, pigment solid content of 20 percent by mass | 20.00 | | | | |
| | Preparation Example 3: Surface-modified cyan pigment dispersion, pigment solid content of 20 percent by mass | | 15.00 | | | |
| | Preparation Example 4: Surface-modified yellow pigment dispersion, pigment solid content of 20 percent by mass | | | 15.00 | | |
| | Preparation Example 5: Liquid dispersion of polymer particulate containing magenta pigment, pigment solid content of 15 percent by mass | | | | | |
| | Preparation Example 6: Liquid dispersion of polymer particulate containing cyan pigment, pigment solid content of 15 percent by mass | | | | | |
| | Preparation Example 7: Liquid dispersion of polymer particulate containing yellow pigment, pigment solid content of 15 percent by mass | | | | | |
| | Preparation Example 8: Liquid dispersion of polymer particulate containing black pigment, pigment solid content of 15 percent by mass | | | | | |
| | Preparation Example 9: Liquid dispersion of polymer containing white pigment, pigment solid content of 50 percent by mass | | | | | 16.00 |
| | White pigment liquid dispersion (AC-RW7, solid content of 45.3 percent by mass | | | | | |
| Resin having Chemical Structure (A) | Synthesis Example 1: water-dispersible polyurethane resin A, solid content of resin of 30 percent by mass | | | | | |
| | Synthesis Example 2: water-dispersible polyurethane resin B, solid content of resin of 30 percent by mass | | | | | |
| | Synthesis Example 3: water-dispersible polyurethane resin C, solid content of resin of 30 percent by mass | | | | | |
| | Synthesis Example 4: water-dispersible polyurethane resin D, solid content of resin of 30 percent by mass | | | | | |
| Other resin | SUPERFLEX^{registered} 300 (polyurethane dispersion, solid content of resin of 33.0 percent by mass) | | | | | |
| | TAKELAC^{trademark} W-6110 (polyurethane dispersion, solid content of resin of 33.4 percent by mass) | | | | | |
| | Synthesis Example 5: Acrylic-silicone resin, solid content of resin of 40 percent by mass | 25.00 | 22.50 | 22.50 | 25.00 | 25.00 |
| Organic solvent, SP value of from 9.0 to 11.8 | 3-methoxy-N,N-dimethyl propanamide, SP value of 9.19 | | | | | |
| | 3-methoxy-3-methyl-1-butanol, SP value of 9.64 | | | | | |
| | 2-ethyl-1,3-hexanediol, SP value of 10.6 | 2.00 | 2.00 | 2.00 | 2.00 | 2.00 |
| | 2,2,4-trimethyl-1,3-pentane diol, SP value of 10.8 | | | | | |
| Other organic solvent | Glycerin, SP value of 16.38 | 21.00 | 23.00 | 23.00 | 20.00 | 21.00 |
| | 1,3-butane diol, SP value of 13.78 | 10.50 | 11.50 | 11.50 | | 10.50 |
| | 3-methyl-1,3-butane diol, SP value of 12.05 | | | | 10.00 | |
| | Propylene glycol, SP value of 13.72 | | | | | |
| Surfactant | Polyether-modified siloxane compound of Chemical Structure (2) | | | | | |
| | TEGO Wet 270 | | | | | |
| | SILFACE SAG503A | | | | | |
| | Surfynol 104E, effective component of 50 percent | | | | | |
| | UNIDYNE^{trademark} DSN403N | 0.08 | 0.08 | 0.082 | 0.04 | 0.08 |
| Mildew-proofing agent | Proxel GXL | 0.05 | 0.05 | 0.05 | 0.05 | 0.05 |
| Foam Inhibitor (Defoaming Agent) | 2,4,7,9-tetramethyl decane-4,7-diol | | | | | |
| | 2,5,8,11-tetramethyl dodecane-5,8-diol | 0.32 | 0.32 | 0.33 | 0.16 | 0.32 |
| pH regulator | 2-amino-2-ethyl-1,3-propane diol | 0.30 | 0.30 | 0.30 | 0.40 | 0.30 |
| Water | Pure water | Balance | Balance | Balance | Balance | Balance |
| Total mass | | 100 | 100 | 100 | 100 | 100 |

**Table 8**

| | | Ink | | | | |
|---|---|---|---|---|---|---|
| | | 36 | 37 | 38 | 39 | 40 |
| | Preparation Example 1: Surface-modified black pigment dispersion, pigment solid content of 20 percent by mass | | | | | |
| Coloring material | Preparation Example 2: Surface-modified magenta pigment dispersion, pigment solid content of 20 percent by mass | | | | | |
| | Preparation Example 3: Surface-modified cyan pigment dispersion, pigment solid content of 20 percent by mass | | | | | |
| | Preparation Example 4: Surface-modified yellow pigment dispersion, pigment solid content of 20 percent by mass | | | | | |
| | Preparation Example 5: Liquid dispersion of polymer particulate containing magenta pigment, pigment solid content of 15 percent by mass | 26.67 | | | | |
| | Preparation Example 6: Liquid dispersion of polymer particulate containing cyan pigment, pigment solid content of 15 percent by mass | | 26.67 | | | |
| | Preparation Example 7: Liquid dispersion of polymer particulate containing yellow pigment, pigment solid content of 15 percent by mass | | | 26.67 | | |
| | Preparation Example 8: Liquid dispersion of polymer particulate containing black pigment, pigment solid content of 15 percent by mass | | | | 33.33 | |
| | Preparation Example 9: Liquid dispersion of polymer containing white pigment, pigment solid content of 50 percent by mass | | | | | |
| | White pigment liquid dispersion (AC-RW7, solid content of 45.3 percent by mass | | | | | 22.08 |
| Resin having Chemical Structure (A) | Synthesis Example 1: water-dispersible polyurethane resin A, solid content of resin of 30 percent by mass | | | | | |
| | Synthesis Example 2: water-dispersible polyurethane resin B, solid content of resin of 30 percent by mass | | | | | |
| | Synthesis Example 3: water-dispersible polyurethane resin C, solid content of resin of 30 percent by mass | | | | | |
| | Synthesis Example 4: water-dispersible polyurethane resin D, solid content of resin of 30 percent by mass | | | | | |
| Other resin | SUPERFLEX^{registered} 300 (polyurethane dispersion, solid content of resin of 33.0 percent by mass) | 36.36 | 36.36 | 36.36 | 36.36 | 36.36 |
| | TAKELAC^{trademark} W-6110 (polyurethane dispersion, solid content of resin of 33.4 percent by mass) | | | | | |
| | Synthesis Example 5: Acrylic-silicone resin, solid content of resin of 40 percent by mass | | | | | |
| Organic solvent, SP value of from 9.0 to 11.8 | 3-methoxy-N,N-dimethyl propanamide, SP value of 9.19 | | | | | |
| | 3-methoxy-3-methyl-1-butanol, SP value of 9.64 | | | | | |
| | 2-ethyl-1,3-hexanediol, SP value of 10.6 | | | | | |
| | 2,2,4-trimethyl-1,3-pentane diol, SP value of 10.8 | 2.00 | 3.00 | 3.00 | 2.00 | 2.00 |
| Other organic solvent | Glycerin, SP value of 16.38 | 25.00 | 25.00 | 25.00 | 25.00 | 25.00 |
| | 1,3-butane diol, SP value of 13.78 | | | | | |
| | 3-methyl-1,3-butane diol, SP value of 12.05 | | | | | |
| | Propylene glycol, SP value of 13.72 | 5.00 | 5.00 | 5.00 | 2.00 | 5.00 |
| Surfactant | Polyether-modified siloxane compound of Chemical Structure (2) | | | | | |
| | TEGO Wet270 | | | | | |
| | SILFACE SAG503A | | | | | |
| | Surfynol 104E, effective component of 50 percent | | | | | |
| | UNIDYNE^{trademark} DSN403N | | | | | |
| Mildew-proofing agent | Proxel GXL | 0.05 | 0.05 | 0.05 | 0.05 | 0.05 |
| Foam Inhibitor (Defoaming Agent) | 2,4,7,9-tetramethyl decane-4,7-diol | 0.10 | 0.10 | 0.10 | 0.10 | 0.10 |
| | 2,5,8,11-tetramethyl dodecane-5,8-diol | | | | | |
| pH regulator | 2-amino-2-ethyl-1,3-propane diol | | | | | |
| Water | Pure water | Balance | Balance | Balance | Balance | Balance |
| Total mass | | 100 | 100 | 100 | 100 | 100 |

**Table 9**

| | | | | | | |
|---|---|---|---|---|---|---|
| | | Ink | | | | |
| | | 41 | 42 | 43 | 44 | 45 |
| | Preparation Example 1: Surface-modified black pigment dispersion, pigment solid content of 20 percent by mass | | | | | |
| Coloring material | Preparation Example 2: Surface-modified magenta pigment dispersion, pigment solid content of 20 percent by mass | | | | | |
| | Preparation Example 3: Surface-modified cyan pigment dispersion, pigment solid content of 20 percent by mass | | | | | |
| | Preparation Example 4: Surface-modified yellow pigment dispersion, pigment solid content of 20 percent by mass | | | | | |
| | Preparation Example 5: Liquid dispersion of polymer particulate containing magenta pigment, pigment solid content of 15 percent by mass | 26.67 | | | | |
| | Preparation Example 6: Liquid dispersion of polymer particulate containing cyan pigment, pigment solid content of 15 percent by mass | | 26.67 | | | |
| | Preparation Example 7: Liquid dispersion of polymer particulate containing yellow pigment, pigment solid content of 15 percent by mass | | | 26.67 | | |
| | Preparation Example 8: Liquid dispersion of polymer particulate containing black pigment, pigment solid content of 15 percent by mass | | | | 33.33 | |
| | Preparation Example 9: Liquid dispersion of polymer containing white pigment, pigment solid content of 50 percent by mass | | | | | |
| | White pigment liquid dispersion (AC-RW7, solid content of 45.3 percent by mass | | | | | 22.08 |
| Resin having Chemical Structure (A) | Synthesis Example 1: water-dispersible polyurethane resin A, solid content of resin of 30 percent by mass | | | | | |
| | Synthesis Example 2: water-dispersible polyurethane resin B, solid content of resin of 30 percent by mass | | | | | |
| | Synthesis Example 3: water-dispersible polyurethane resin C, solid content of resin of 30 percent by mass | | | | | |
| | Synthesis Example 4: water-dispersible polyurethane resin D, solid content of resin of 30 percent by mass | | | | | |
| Other resin | SUPERFLEX^{registered} 300 (polyurethane dispersion, solid content of resin of 33.0 percent by mass) | 36.36 | 36.36 | 36.36 | 36.36 | 36.36 |
| | TAKELAC^{trademark} W-6110 (polyurethane dispersion, solid content of resin of 33.4 percent by mass) | | | | | |
| | Synthesis Example 5: Acrylic-silicone resin, solid content of resin of 40 percent by mass | | | | | |
| Organic solvent, SP value of from 9.0 to 11.8 | 3-methoxy-N,N-dimethyl propanamide, SP value of 9.19 | | | | | |
| | 3-methoxy-3-methyl-1-butanol, SP value of 9.64 | | | | | |
| | 2-ethyl-1,3-hexanediol, SP value of 10.6 | | | | | |
| | 2,2,4-trimethyl-1,3-pentane diol, SP value of 10.8 | 2.00 | 3.00 | 3.00 | 2.00 | 2.00 |
| Other organic solvent | Glycerin, SP value of 16.38 | 25.00 | 25.00 | 25.00 | 25.00 | 25.00 |
| | 1,3-butane diol, SP value of 13.78 | | | | | |
| | 3-methyl-1,3-butane diol, SP value of 12.05 | | | | | |
| | Propylene glycol, SP value of 13.72 | 5.00 | 5.00 | 5.00 | 2.00 | 5.00 |
| Surfactant | Polyether-modified siloxane compound of Chemical Structure (2) | | | | | |
| | TEGO Wet 270 | | | | | |
| | SILFACE SAG503A | | | | | |
| | Surfynol 104E, effective component of 50 percent | | | | | |
| | UNIDYNE^{trademark} DSN403N | | | | | |
| Mildew-proofing agent | Proxel GXL | 0.05 | 0.05 | 0.05 | 0.05 | 0.05 |
| Foam Inhibitor (Defoaming Agent) | 2,4,7,9-tetramethyl decane-4,7-diol | 0.12 | 0.10 | 0.08 | 0.11 | 0.10 |
| | 2,5,8,11-tetramethyl dodecane-5,8-diol | | | | | |
| pH regulator | 2-amino-2-ethyl-1,3-propane diol | | | | | |
| Water | Pure water | Balance | Balance | Balance | Balance | Balance |
| Total mass | | 100 | 100 | 100 | 100 | 100 |

### Properties of White Ink and Color Ink

Next, the properties of the obtained inks 1 to 45 were analyzed as follows. The results are shown in Table 10.

### Viscosity

The viscosity of the ink was measured by a viscometer (RE-85L, manufactured by TOKI SANGYO CO., LTD.) at 25 degrees C.

### pH

pH of the ink was measured at 25 degrees C using a pH meter (HM-30R type, manufactured by DKK-TOA CORPORATION).

### Static Surface Tension

The static surface tension of each ink was measured at 25 degrees C using an automatic surface tensiometer (DY-300, manufactured by KYOWA INTERFACE SCIENCE Co., Ltd.).

### Dynamic Surface Tension

The dynamic surface tension of ink was measured at 25 degrees C at each bubble life time of 15 msec, 150 msec, and 1,500 msec by SITA DynoTester (manufactured by SITA Messtechnik GmbH) as measured by maximum bubble pressure technique.

**Table 10**

| Ink | Color | Ink property values | | | | | | |
|---|---|---|---|---|---|---|---|---|
| | | Viscosity (mPa·s) | pH | Static surface tension (mN/m) | Dynamic surface tension (mN/m) | | | Relationship regarding dynamic surface tension between color inks at 15 msec |
| | | | | | 15 msec | 150 msec | 1500 msec | |
| 1 | Magenta | 8.27 | 9.56 | 21.3 | 35.2 | 30.1 | 28.0 | B>M>C>Y |
| 2 | Cyan | 8.13 | 9.44 | 21.1 | 35.0 | 29.9 | 27.8 | |
| 3 | Yellow | 8.04 | 9.48 | 21.0 | 34.9 | 29.9 | 27.7 | |
| 4 | Black | 8.19 | 9.66 | 21.9 | 35.7 | 30.8 | 28.6 | |
| 5 | White | 8.42 | 9.59 | 21.4 | 35.3 | 30.3 | 28.1 | |
| 6 | Magenta | 8.87 | 9.17 | 21.7 | 29.7 | 22.3 | 20.9 | M > Y > B ≥ C |
| 7 | Cyan | 8.88 | 9.06 | 21.6 | 29.3 | 22.2 | 20.8 | |
| 8 | Yellow | 8.89 | 8.97 | 21.6 | 29.6 | 22.3 | 20.9 | |
| 9 | Black | 9.14 | 9.09 | 21.6 | 29.3 | 22.2 | 20.9 | |
| 10 | White | 9.22 | 9.15 | 22.0 | 30.1 | 22.9 | 21.7 | |
| 11 | Magenta | 10.79 | 8.70 | 26.7 | 38.4 | 30.9 | 27.7 | B > C > M ≥ Y |
| 12 | Cyan | 11.00 | 8.32 | 26.8 | 38.6 | 31.0 | 27.9 | |
| 13 | Yellow | 11.42 | 9.11 | 26.5 | 38.4 | 30.8 | 27.4 | |
| 14 | Black | 10.62 | 9.01 | 26.9 | 39.0 | 31.5 | 28.2 | |
| 15 | White | 11.43 | 9.10 | 26.5 | 38.4 | 30.6 | 27.3 | |
| 16 | Magenta | 10.62 | 8.82 | 23.8 | 38.2 | 31.4 | 27.3 | Y > B > C ≥ M |
| 17 | Cyan | 10.39 | 8.55 | 24.2 | 38.2 | 31.4 | 26.8 | |
| 18 | Yellow | 10.67 | 9.23 | 25.7 | 38.6 | 32.3 | 29.2 | |
| 19 | Black | 10.89 | 9.28 | 24.3 | 38.3 | 31.6 | 27.3 | |
| 20 | White | 8.47 | 9.33 | 26.9 | 38.3 | 32.0 | 28.9 | |
| 21 | Magenta | 10.78 | 9.31 | 26.0 | 39.2 | 31.3 | 27.8 | B > C > M ≥ Y |
| 22 | Cyan | 10.92 | 9.24 | 26.2 | 39.4 | 31.3 | 27.8 | |
| 23 | Yellow | 10.67 | 9.15 | 25.5 | 39.2 | 31.0 | 27.4 | |
| 24 | Black | 10.66 | 9.16 | 26.4 | 39.9 | 31.9 | 28.1 | |
| 25 | White | 10.49 | 9.16 | 25.9 | 39.2 | 31.0 | 27.4 | |
| 26 | Magenta | 11.46 | 7.97 | 35.9 | 49.9 | 38.2 | 34.9 | M>C>B>Y |
| 27 | Cyan | 11.33 | 8.00 | 35.0 | 48.4 | 38.4 | 35.8 | |
| 28 | Yellow | 11.41 | 7.86 | 35.0 | 44.8 | 36.1 | 34.2 | |
| 29 | Black | 11.64 | 8.22 | 35.7 | 46.9 | 37.6 | 35.6 | |
| 30 | White | 11.25 | 8.33 | 31.2 | 59.1 | 48.9 | 37.8 | |
| 31 | Magenta | 8.33 | 9.51 | 21.5 | 36.5 | 30.5 | 28.3 | B>M>C>Y |
| 32 | Cyan | 8.14 | 9.40 | 21.3 | 36.2 | 30.0 | 28.0 | |
| 33 | Yellow | 8.20 | 9.45 | 21.2 | 36.0 | 29.9 | 27.8 | |
| 34 | Black | 8.25 | 9.63 | 22.0 | 36.9 | 30.8 | 28.7 | |
| 35 | White | 8.52 | 9.56 | 21.6 | 36.5 | 30.6 | 28.4 | |
| 36 | Magenta | 11.32 | 7.96 | 44.3 | 55.9 | 48.2 | 44.9 | M>C>B>Y |
| 37 | Cyan | 11.18 | 7.98 | 42.4 | 53.4 | 46.0 | 42.8 | |
| 38 | Yellow | 11.26 | 7.85 | 40.5 | 51.8 | 43.6 | 41.2 | |
| 39 | Black | 11.33 | 8.19 | 43.9 | 54.7 | 45.6 | 43.6 | |
| 40 | White | 11.11 | 8.30 | 42.7 | 54.1 | 44.9 | 42.8 | |
| 41 | Magenta | 11.32 | 7.96 | 42.3 | 53.8 | 44.5 | 42.6 | Y>B>C>M |
| 42 | Cyan | 11.18 | 7.98 | 42.4 | 53.9 | 44.5 | 42.8 | |
| 43 | Yellow | 11.26 | 7.85 | 43.2 | 54.6 | 45.4 | 43.5 | |
| 44 | Black | 11.33 | 8.19 | 42.9 | 54.3 | 45.2 | 43.1 | |
| 45 | White | 11.11 | 8.30 | 42.7 | 54.1 | 44.9 | 42.8 | |

### Manufacturing Example of Pre-processing Fluid

### Preparation Example 1: Manufacturing of Pre-processing Fluid 1

A total of 7.5 parts by mass of ammonium lactate was weighed and placed in a glass beaker. A total of highly pure water of 50.00 parts was added followed by stirring for five minutes. Next, 10.00 percent by mass of propylene glycol, 0.1 parts by mass of OLFINE^{registered} EXP.4300, 0.05 parts by mass of Proxel GXL, 0.1 parts by mass of 1,2,3-benzotriazoles were further added followed by stirring for 15 minutes. Thereafter, a balance of highly pure water was added to make the total 100 parts by mass followed by stirring for 10 minutes. The thus-obtained mixture was filtered with a polyvinilydene fluoride membrane filter having an average pore diameter of 5.0 µm under pressure to remove dust such as insoluble matter to prepare pre-processing fluid 1.

### Manufacturing Examples 2 to 16: Manufacturing of Pre-processing Fluids 2 to 16

Pre-processing fluids 2 to 16 were obtained in the same manner as in Manufacturing Example 1 except that the prescription of pre-processing fluid was changed to those shown in Tables 11 to 13. The content of each material is represented in percent by mass in Tables 11 to 13 below. It does not represent the content of solid content or effective component but all included.

### The details of each material shown in Tables 11 to 13 below are as follows.

### Cationic Polymer

· SHALLOL DC-902P: Polydimethyl diallyl ammonium chloride, solid content of 51.0 percent by mass, manufactured by DKS Co., Ltd.
· DK8610: Polyamine resin, solid content of 55.0 percent by mass. manufactured by SEIKO PMC CORPORATION

### Nonionic Resin Particle

· TAKELAC^{trademark} W-635: Polyurethane dispersion, solid content of 35 percent, manufactured by Mitsui Chemicals, Inc.
· SUMIKAFLEX 850HQ: Copolymer of ethylene-vinyl chloride-vinyl acetate, solid content of 50 percent by mass, manufactured by Sumitomo Chemical Company· SUMIKAFLEX 951HQ: Copolymer of ethylene-vinyl acetate-vinyl versatate, solid content of 55 percent by mass, manufactured by Sumitomo Chemical Company

### Cationic Resin Particle

· Arrowbase CB-1200, solid content of 23 percent by mass, manufactured by UNITIKA LTD.

### Surfactant

· OLFINE^{registered} EXP.4300, effective component of 60 percent by mass, manufactured by Nissin Chemical Co., Ltd.

### Wax

· AQUACER 497: Paraffin wax, effective component of 50 percent by mass, manufactured by BYK Japan
· AQUACER 539: Modified paraffin wax, effective component of 35 percent by mass, manufactured by BYK Japan
· AQUACER 531: Modified polyethylene wax, effective component of 45 percent by mass, manufactured by BYK Japan

### Mildew-proofing Agent

·PROXEL GXL: mildew-proofing agent mainly composed of 1,2-benzisothiazolin-3-one, component of 20 percent, containing dipropylene glycol, manufactured by Avecia Inkjet Limited

### Storage Stability of Pre-processing Fluid

The thus-obtained pre-processing fluids 1 to 16 were stored at 60 degrees C for 10 days. The change of the pre-processing fluid during storage was evaluated according to the following criteria. The results are shown in Tables 11 to 13.

### Evaluation Criteria

A: No clear change
B: impossible to use as pre-processing fluid because it aggregated or became sticky

**Table 11**

| | | Pre-processing fluid | | | | |
|---|---|---|---|---|---|---|
| | | 1 | 2 | 3 | 4 | 5 |
| Organic acid ammonium salt | Ammonium lactate, solid content of 100 percent | 7.50 | 7.50 | | | |
| | Ammonium acetate, solid content of 75 percent | | | 13.33 | | |
| Organic acid metal salt | Calcium lactate, solid content of 100 percent | | | | 10.00 | |
| | Ammonium tartarate, solid content of 100 percent | | | | | 12.00 |
| Inorganic metal salt | Magnesium sulfate, solid content of 100 percent | | 2.50 | | | |
| | Calcium chloride, solid content of 100 percent | | | | | |
| Cationic polymer | SHALLOL DC-902P, solid content of 51 percent | | | | | |
| | DK8610, solid content of 55 percent | | | | | |
| Nonionic resin particle | TAKELAC^{trademark} W-635, solid content of 35 percent | | 8.57 | | | 8.57 |
| | SUMIKAFLEX 850HQ, solid content of 50 percent | | | 6.00 | | |
| | SUMIKAFLEX 951HQ, solid content of 55 percent | | | | 5.46 | |
| Cationic resin particle | Arrowbase CB-1200, solid content of 23 percent | | | | | |
| Organic solvent | Propylene glycol | 10.00 | 5.00 | 5.00 | 5.00 | 5.00 |
| Surfactant | OLFINE^{registered} EXP.4300, solid content of 60 percent | 0.10 | 0.10 | 0.10 | 0.10 | 0.10 |
| Wax | AQUACER 497, solid content of 50 percent | | | | | |
| | AQUACER 539, solid content of 35 percent | | | | | |
| | AQUACER 531, solid content of 45 percent | | | | | |
| Mildew-proofing agent | Proxel GXL | 0.05 | 0.05 | 0.05 | 0.05 | 0.05 |
| Corrosion Inhibitor | 1,2,3-benzotriazole | 0.10 | 0.10 | 0.10 | 0.10 | 0.10 |
| Water | Highly pure water | Balance | Balance | Balance | Balance | Balance |
| Total (percent by mass) | | 100 | 100 | 100 | 100 | 100 |
| Storage stability | | A | A | A | A | A |

**Table 12**

| | | Pre-processing fluid | | | | |
|---|---|---|---|---|---|---|
| | | 6 | 7 | 8 | 9 | 10 |
| Organic acid ammonium salt | Ammonium lactate, solid content of 100 percent | | | | | |
| | Ammonium acetate, solid content of 75 percent | | | | | |
| Organic acid metal salt | Calcium lactate, solid content of 100 percent | | | | | |
| | Ammonium tartarate, solid content of 100 percent | | | | | |
| Inorganic metal salt | Magnesium sulfate, solid content of 100 percent | 12.50 | | 12.50 | | |
| | Calcium chloride, solid content of 100 percent | | | | | 15.00 |
| Cationic polymer | SHALLOL DC-902P, solid content of 51 percent | | 19.61 | | 19.61 | |
| | DK8610, solid content of 55 percent | | | | | |
| Nonionic resin particle | TAKELAC^{trademark} W-635, solid content of 35 percent | 17.14 | | 17.14 | | |
| | SUMIKAFLEX 850HQ, solid content of 50 percent | | 12.00 | | 12.00 | 20.00 |
| | SUMIKAFLEX 951HQ, solid content of 55 percent | | | | | |
| Cationic resin particle | Arrowbase CB-1200, solid content of 23 percent | | | | | |
| Organic solvent | Propylene glycol | 3.00 | | 3.00 | | |
| Surfactant | OLFINE^{registered} EXP.4300, solid content of 60 percent | | | | | |
| Wax | AQUACER 497, solid content of 50 percent | | | 2.00 | 1.00 | |
| | AQUACER 539, solid content of 35 percent | | | | 1.43 | |
| | AQUACER 531, solid content of 45 percent | | | | | |
| Mildew-proofing agent | Proxel GXL | 0.05 | 0.05 | 0.05 | 0.05 | 0.05 |
| Corrosion inhibitor | 1,2,3-benzotriazole | 0.10 | 0.10 | 0.10 | 0.10 | 0.10 |
| Water | Highly pure water | Balance | Balance | Balance | Balance | Balance |
| Total (percent by mass) | | 100 | 100 | 100 | 100 | 100 |
| Storage stability | | A | A | A | A | A |

**Table 13**

| | | Pre-processing fluid | | | | | |
|---|---|---|---|---|---|---|---|
| | | 11 | 12 | 13 | 14 | 15 | 16 |
| Organic acid ammonium salt | Ammonium lactate, solid content of 100 percent | | | | | | |
| | Ammonium acetate, solid content of 75 percent | | | | | | |
| Organic acid metal salt | Calcium lactate, solid content of 100 percent | | | | | | |
| | Ammonium tartarate, solid content of 100 percent | | | | | | |
| Inorganic metal salt | Magnesium sulfate, solid content of 100 percent | | | | | | |
| | Calcium chloride, solid content of 100 percent | | 15.00 | | 15.00 | 15.00 | 15.00 |
| Cationic polymer | SHALLOL DC-902P, solid content of 51 percent | | | | | | |
| | DK8610, solid content of 55 percent | 22.73 | | 22.73 | | | |
| Nonionic resin particle | TAKELAC^{trademark} W-635, solid content of 35 percent | | | | | | |
| | SUMIKAFLEX 850HQ, solid content of 50 percent | | 20.00 | | 20.00 | 20.00 | |
| | SUMIKAFLEX 951HQ, solid content of 55 percent | 13.64 | | 13.64 | | | |
| Cationic resin particle | Arrowbase CB-1200, solid content of 23 percent | | | | | | 43.48 |
| Organic solvent | Propylene glycol | | | | | | |
| Surfactant | OLFINE^{registered} EXP.4300, solid content of 60 percent | | | | | | |
| Wax | AQUACER 497, solid content of 50 percent | | 5.00 | | | | |
| | AQUACER 539, solid content of 35 percent | | | 5.71 | | | |
| | AQUACER 531, solid content of 45 percent | | | | | 5.55 | 5.55 |
| Mildew-proofing agent | Proxel GXL | 0.05 | 0.05 | 0.05 | 0.05 | 0.05 | 0.05 |
| Corrosion Inhibitor | 1,2,3-benzotriazole | 0.10 | 0.10 | 0.10 | 0.10 | 0.10 | 0.10 |
| Water | Highly pure water | Balance | Balance | Balance | Balance | Balance | Balance |
| Total (percent by mass) | | 100 | 100 | 100 | 100 | 100 | 100 |
| Storage stability | | A | A | A | A | A | B |

### Image Forming Using Ink Set

Examples 1 to 18 and Comparative Examples 1 to 7 (where Examples 2-5 and 10-12 do not fall within the literal scope of the claims)

In an environment in which the temperature and moisture were controlled within the range of from 23 ± 0.5 degrees C and from 50 ± 5 percent RH, an inkjet printer, Direct to Garment Printer RICOH Ri 6000, manufactured by RICOH CO., LTD., was used to attach the same amount of ink to printing media by changing the drive voltage of piezoelectric element.

A predetermined amount of pre-processing fluid was applied according to each combination of pre-processing fluid, printing medium, and printing method shown in Table 14. Thereafter, for coated paper, vinyl chloride film, or PET film, it was dried in an oven at 70 degrees C for 120 seconds. For dark color polyester T-shirts, at 130 degrees C for 90 seconds and for dark color cotton T-shirt, 165 degrees C for 90 seconds.

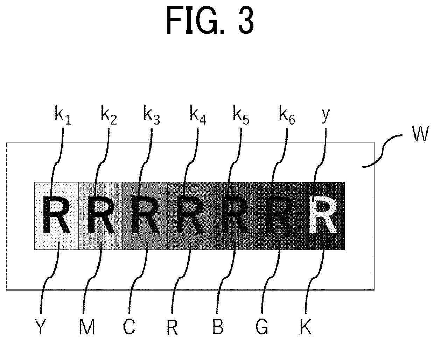

Next, the inkjet printer mentioned above was filled with the white ink and the color ink contained in the ink set shown in Table 14 and it formed a white solid image on the region where the pre-processing fluid was applied by discharging the white ink in the amount shown in Table 14. The color ink was applied in the amount shown in Table 14 to the solid image 17 seconds after the application of the white ink. The chart illustrated in FIG. 3 was thus obtained. The printing medium was not heated between the application of white ink and the application of color ink.

Thereafter, when the printing medium on which the chart was formed was coated paper, vinyl chloride film, or PET film, it was dried in an oven at 70 degrees C for 5 minutes. For a dark color polyester T-shirt, at 130 degrees C for 3 minutes and for a dark color cotton T-shirt, 165 degrees C for 2 minutes.

In FIG. 3, W represents the white solid image, Y represents the yellow solid image formed on the W, M represents the magenta solid image formed on the W, C represents the cyan solid image formed on the W, R represents the red solid image formed on the W, B represents the blue solid image formed on the W, G represents the green solid image formed on the W, K represents the black solid image formed on the W, k1 to k6 represent the black letter R formed on the W, and y represents the yellow letter R formed on the W. The image illustrated in FIG. 3 was created based on an image digitized using PhotoShop, a software product of Adobe Inc., without color calibration and printed at 600 dpi × 600 dpi.

The details of each printing medium shown in Table 14 below are as follows.
· OK TopKote+, coated paper, weight of 157 g/m², manufactured by OJI PAPER CO., LTD.
· NIJ-OVCM, vinyl chloride film, thickness of substrate of 120 µm and adhesive of 25 µm, manufactured by NITIE CORPORATION
· Lumirror^{trademark} #50-T11, transparent PET film subjected to readily attachable treatment, manufactured by Toray Industries, Inc.
· 00300-ACT, dark color polyester T-shirt, Glimmer 00300-ACT, Black, manufactured by TOMS CO., LTD.
· 00085-CVT, dark color cotton T-shirt, Printstar 00085-CVT, Black, manufactured by TOMS CO., LTD.

**Table 14**

| | | Printing medium | Pre-processing fluid | | | Ink set | White ink | Color ink |
|---|---|---|---|---|---|---|---|---|
| | | | | Application method | Amount attached (g/m²) | | Amount attached (g/m²) | Amount attached (g/m²) |
| | 1 | **OK** TopKote+ | 1 | Barcoat | 3.4 | Ink 1 to 5 | 21 | 11 ± 0.5 |
| | 2 | NIJ-PVCM | 2 | Barcoat | 3.4 | Ink 6 to 10 | 21 | 11 ± 0.5 |
| Example | 3 | NIJ-PVCM | 3 | Barcoat | 3.4 | Ink 6 to 10 | 21 | 11 ± 0.5 |
| | 4 | Lumirror^{trademark} #50-T11 | 4 | Barcoat | 3.4 | Ink 6 to 10 | 21 | 11 ± 0.5 |
| | 5 | Lumirror^{trademark} #50-T11 | 5 | Barcoat | 3.4 | Ink 6 to 10 | 21 | 11 ± 0.5 |
| | 6 | 00085-CVT | 6 | Spraying by hand | 352 | Ink 11 to 15 | 220 | 19 ± 1 |
| | 7 | 00085-CVT | 7 | Spraying by hand | 352 | Ink 21 to 25 | 220 | 19 ± 1 |
| | 8 | 00085-CVT | 8 | Spraying by hand | 352 | Ink 11 to 15 | 220 | 19 ± 1 |
| | 9 | 00085-CVT | 9 | Spraying by hand | 352 | Ink 21 to 25 | 220 | 19 ± 1 |
| | 10 | 00085-CVT | 6 | Spraying by hand | 352 | Ink 31 to 35 | 220 | 19 ± 1 |
| | 11 | 00085-CVT | 7 | Spraying by hand | 352 | Ink 41 to 45 | 220 | 19 ± 1 |
| | 12 | 00085-CVT | 6 | Spraying by hand | 352 | Ink 6 to 10 | 220 | 19 ± 1 |
| | 13 | 00300-ACT | 10 | Spraying by hand | 352 | Ink 11 to 15 | 220 | 19 ± 1 |
| | 14 | 00300-ACT | 11 | Spraying by hand | 352 | Ink 21 to 25 | 220 | 19 ± 1 |
| | 15 | 00300-ACT | 12 | Spraying by hand | 352 | Ink 11 to 15 | 220 | 19 ± 1 |
| | 16 | 00300-ACT | 13 | Spraying by hand | 352 | Ink 21 to 25 | 220 | 19 ± 1 |
| | 17 | 00300-ACT | 14 | Spraying by hand | 352 | Ink 11 to 15 | 220 | 19 ± 1 |
| | 18 | 00300-ACT | 15 | Spraying by hand | 352 | Ink 11 to 15 | 220 | 19 ± 1 |
| Comparative Example | 1 | Lumirror^{trademark} #50-T11 | 5 | Barcoat | 3.4 | Ink 16 to 20 | 20.8 ± 1 | 11.2 ± 1 |
| | 2 | 00085-CVT | 6 | Spraying by hand | 352 | Ink 16 to 20 | 220 | 19 ± 1 |
| | 3 | 00085-CVT | 6 | Spraying by hand | 352 | Ink 26 to 30 | 220 | 19 ± 1 |
| | 4 | 00085-CVT | 6 | Spraying by hand | 352 | Ink 36 to 40 | 220 | 19 ± 1 |
| | 5 | 00300-ACT | 13 | Spraying by hand | 352 | Ink 16 to 20 | 220 | 19 ± 1 |
| | 6 | 00300-ACT | 13 | Spraying by hand | 352 | Ink 26 to 30 | 220 | 19 ± 1 |
| | 7 | 00300-ACT | 13 | Spraying by hand | 352 | Ink 36 to 40 | 220 | 19 ± 1 |

Each of the obtained sample images was evaluated regarding Hunter's Brightness, color bleed, and beading as follows. The results are shown in Table 15.

### Hunter's Brightness

The image density of the white solid image portion in the obtained sample image was measured using a spectrophotometer, X-rite exact, manufactured by X-rite Inc. Hunter's Brightness was calculated according to the following expression (1) and evaluated according to the evaluation criteria below. The image density was measured for a sample image placed on five sheets of color quality paper, middle thick paper, black paper, manufactured by Hokuetsu Corporation. The printing media for use in Examples 1 to 3 were not measured or evaluated regarding Hunter's Brightness because they were originally white.

### Evaluation Criteria

A+: Hunter's Brightness was 85 or more
A: Hunter's Brightness was 80 to less than 85
B: Hunter's brightness was from 75 to less than 80
C: Hunter's brightness was from 70 to less than 75
D: Hunter's Brightness was less than 70
$Hunter ′ s Brightness = 100 - sqr \left[{\left(100-L\right)}^{2}+\left({a}^{2}+{b}^{2}\right)\right]$

### Color Bleed

The degrees of boundary color bleed between the solid image portion of each color and the adjacent white solid image portion, for example, yellow and white, and boundary color bleed between the solid image portion and the adjacent other color image portion, for example, yellow and black, were visually checked at the solid image of each color in the obtained sample image and evaluated according to the evaluation criteria below.

### Evaluation Criteria

A+: No boundary color bleed present
A: Extremely slight boundary color bleed present
B: Slight boundary color bleed present
C: Boundary color bleed present
D: Significant boundary color bleed present

### Beading

The beading at the solid image portion of each color in the obtained sample image was visually checked and evaluated according to evaluation criteria below.

### Evaluation Criteria

A: No uneven density present
B: Slight uneven density present
C: Uneven density present
D: Significant uneven density present

**Table 15**

| | | Printing medium | Pre-processing fluid | Ink set | Static surface tension |
|---|---|---|---|---|---|
| | | | | | Maximum difference between white ink and color ink (mN/m) |
| | 1 | **OK** TopKote+ | 1 | Ink 1 to 5 | 0.5 |
| | 2 | NIJ-PVCM | 2 | Ink 6 to 10 | 0.4 |
| | 3 | NIJ-PVCM | 3 | Ink 6 to 10 | 0.4 |
| | 4 | Lumirror^{trademark} #50-T11 | 4 | Ink 6 to 10 | 0.4 |
| | 5 | Lumirror^{trademark} #50-T11 | 5 | Ink 6 to 10 | 0.4 |
| | 6 | 00085-CVT | 6 | Ink 11 to 15 | 0.4 |
| Example | 7 | 00085-CVT | 7 | Ink 21 to 25 | 0.5 |
| | 8 | 00085-CVT | 8 | Ink 11 to 15 | 0.4 |
| | 9 | 00085-CVT | 9 | Ink 21 to 25 | 0.5 |
| | 10 | 00085-CVT | 6 | Ink 31 to 35 | 0.4 |
| | 11 | 00085-CVT | 7 | Ink 41 to 45 | 0.5 |
| | 12 | 00085-CVT | 6 | Ink 6 to 10 | 0.4 |
| | 13 | 00300-ACT | 10 | Ink 11 to 15 | 0.4 |
| | 14 | 00300-ACT | 11 | Ink 21 to 25 | 0.5 |
| | 15 | 00300-ACT | 12 | Ink 11 to 15 | 0.4 |
| | 16 | 00300-ACT | 13 | Ink 21 to 25 | 0.5 |
| | 17 | 00300-ACT | 14 | Ink 11 to 15 | 0.4 |
| | 18 | 00300-ACT | 15 | Ink 11 to 15 | 0.4 |
| Comparative Example | 1 | Lumirror^{trademark} #50-T11 | 5 | Ink 16 to 20 | 3.2 |
| | 2 | 00085-CVT | 6 | Ink 16 to 20 | 3.2 |
| | 3 | 00085-CVT | 6 | Ink 26 to 30 | 4.7 |
| | 4 | 00085-CVT | 6 | Ink 36 to 40 | 2.2 |
| | 5 | 00300-ACT | 13 | Ink 16 to 20 | 3.2 |
| | 6 | 00300-ACT | 13 | Ink 26 to 30 | 4.7 |
| | 7 | 00300-ACT | 13 | Ink 36 to 40 | 3.2 |

| | | Dynamic surface tension | | | | Evaluation result | | |
|---|---|---|---|---|---|---|---|---|
| | | Maximum difference between white ink and color ink | | | Maximum difference between color inks | Color bleed | Beading | Hunter's Brightness |
| | | 15 msec (mN/m) | 150 msec (mN/m) | 1,500 msec (mN/m) | 15 msec (mN/m) | | | |
| Example | 1 | 0.4 | 0.5 | 0.5 | 0.8 | A+ | A | Not evaluated |
| | 2 | 0.8 | 0.7 | 0.9 | 0.4 | A | A | Not evaluated |
| | 3 | 0.8 | 0.7 | 0.9 | 0.4 | A | A | Not evaluated |
| | 4 | 0.8 | 0.7 | 0.9 | 0.4 | A | A | A |
| | 5 | 0.8 | 0.7 | 0.9 | 0.4 | A | A | A |
| | 6 | 0.6 | 0.9 | 0.9 | 0.6 | A+ | A | A |
| | 7 | 0.7 | 0.9 | 0.7 | 0.7 | A+ | A | A |
| | 8 | 0.6 | 0.9 | 0.9 | 0.6 | A | A | A+ |
| | 9 | 0.7 | 0.9 | 0.7 | 0.7 | A | A | A+ |
| | 10 | 0.5 | 0.7 | 0.6 | 0.9 | A | A | A |
| | 11 | 0.5 | 0.5 | 0.7 | 0.8 | B | B | A |
| | 12 | 0.8 | 0.7 | 0.9 | 0.4 | A | A | A |
| | 13 | 0.6 | 0.9 | 0.9 | 0.6 | A | A | B |
| | 14 | 0.7 | 0.9 | 0.7 | 0.7 | A | A | B |
| | 15 | 0.6 | 0.9 | 0.9 | 0.6 | B | A | A+ |
| | 16 | 0.7 | 0.9 | 0.7 | 0.7 | B | A | A+ |
| | 17 | 0.6 | 0.9 | 0.9 | 0.6 | A | A | B |
| | 18 | 0.6 | 0.9 | 0.9 | 0.6 | B | A | A |
| Comparative Example | 1 | 0.3 | 0.6 | 2.1 | 0.4 | C | B | A+ |
| | 2 | 0.3 | 0.6 | 2.1 | 0.4 | D | C | A |
| | 3 | 14.3 | 12.8 | 3.6 | 5.1 | D | C | A |
| | 4 | 2.3 | 3.3 | 2.1 | 4.1 | C | D | A |
| | 5 | 0.3 | 0.6 | 2.1 | 0.4 | D | C | A |
| | 6 | 14.3 | 12.8 | 3.6 | 5.1 | D | C | A |
| | 7 | 0.3 | 0.6 | 2.1 | 0.4 | C | D | A |

## Claims

1. An ink set comprising:
a white ink comprising a first organic solvent, water, a first coloring material, a first resin, and a first surfactant, wherein the proportion of the first surfactant to the white ink is 0.001 percent by mass or more, and the proportion of the first organic solvent to the white ink is from 5.0 to 60.0 percent by mass; and
a color ink comprising a second organic solvent, water, a second coloring material, a second resin, and a second surfactant, wherein the proportion of the second surfactant to the color ink is 0.001 percent by mass or more, and the proportion of the second organic solvent to the color ink is from 5.0 to 60.0 percent by mass,
wherein a difference in static surface tension between the white ink and the color ink is 1.0 mN/m or less at 25 degrees C,
wherein each difference in dynamic surface tension between the white ink and the color ink at each bubble life time of 15 msec, 150 msec, and 1,500 msec at 25 degrees Cis 1.0 mN/m or less as measured by the maximum bubble pressure technique,
wherein the color ink comprises black ink, cyan ink, magenta ink, and yellow ink,
wherein the black ink, the cyan ink, the magenta ink, and the yellow ink satisfy the following relationships (1) and (2): $Dsb > Dsc \geq Dsm \geq Dsy$ and $Dsb - Dsy \leq 1.0 mN / m$
where Dsb, Dsc, Dsm, and Dsy respectively represent a dynamic surface tension of the black ink, a dynamic surface tension of the cyan ink, a dynamic surface tension of the magenta ink, and a dynamic surface tension of the yellow ink at a bubble life time of 15 msec at 25 degrees C as measured by maximum bubble pressure technique.

2. The ink set according to claim 1,
wherein each of the white ink and the color ink has a static surface tension of 40.0 mN/m or less at 25 degrees C.

3. The ink set according to any one of claims 1 to 2,
further comprising a pre-processing fluid,
wherein the pre-processing fluid comprises water and a flocculant, the flocculant comprising at least one member selected from the group consisting of an inorganic metal salt, an organic acid metal salt, an organic acid ammonium salt, and a cationic polymer.

4. The ink set according to claim 3,
wherein the pre-processing fluid further comprises nonionic resin particles.

5. The ink set according to claim 3 or 4,
wherein the pre-processing fluid further comprises wax particles.

6. The ink set according to claim 5,
wherein the wax particles comprises paraffin wax particles.

7. An image forming method comprising:
applying a white ink, the white ink comprising a first organic solvent, water, a first coloring material, a first resin, and a first surfactant, wherein the proportion of the first surfactant to the white ink is 0.001 percent by mass or more, and the proportion of the first organic solvent to the white ink is from 5.0 to 60.0 percent by mass, to all or part of a recording medium; and
applying a color ink, the color ink comprising a second organic solvent, water, a second coloring material, a second resin, and a second surfactant, wherein the proportion of the second surfactant to the color ink is 0.001 percent by mass or more, and the proportion of the second organic solvent to the color ink is from 5.0 to 60.0 percent by mass, to the all or part of a recording medium where the white ink has been applied,
wherein a difference in static surface tension between the white ink and the color ink is 1.0 mN/m or less at 25 degrees C,
wherein a difference in dynamic surface tension between the white ink and the color ink at each bubble life time of 15 msec, 150 msec, and 1,500 msec at 25 degrees C is 1.0 mN/m or less as measured by maximum bubble pressure technique, and
wherein the color ink comprises black ink, cyan ink, magenta ink, and yellow ink,
wherein the black ink, the cyan ink, the magenta ink, and the yellow ink satisfy the following relationships (1) and (2): $Dsb > Dsc \geq Dsm \geq Dsy$ and $Dsb - Dsy \leq 1.0 mN / m$
where Dsb, Dsc, Dsm, and Dsy respectively represent a dynamic surface tension of the black ink, a dynamic surface tension of the cyan ink, a dynamic surface tension of the magenta ink, and a dynamic surface tension of the yellow ink at a bubble life time of 15 msec at 25 degrees C as measured by maximum bubble pressure technique.

8. The image forming method according to claim 7,
further comprising applying pre-processing fluid to the all or part of a recording medium before the applying a white ink.

9. The image forming method according to claim 7 or 8,
wherein the method is free of applying heat to the recording medium between the applying the white ink and the applying the color ink.

10. The image forming method according to any one of claims 7 to 9,
wherein a time length between the applying a white ink and the applying a color ink is 20 seconds or less.

11. The image forming method according to any one of claims 7 to 10,
wherein the recording medium is dark-colored fabric.

12. An image forming apparatus (400) comprising:
a container (410; 410w) containing a white ink, the white ink comprising a first organic solvent, water, a first coloring material, a first resin, and a first surfactant, wherein the proportion of the first surfactant to the white ink is 0.001 percent by mass or more, and the proportion of the first organic solvent to the white ink is from 5.0 to 60.0 percent by mass;
a container (410; 410k; 410c) containing a color ink, the color ink comprising a second organic solvent, water, a second coloring material, a second resin, and a second surfactant, wherein the proportion of the second surfactant to the color ink is 0.001 percent by mass or more, and the proportion of the second organic solvent to the color ink is from 5.0 to 60.0 percent by mass;
an applying device (434) configured to apply the white ink to all or part of a recording medium;
and
an applying device (434) configured to apply the color ink to the all or part of a recording medium where the white ink has been applied,
wherein a difference in static surface tension between the white ink and the color ink is 1.0 mN/m or less at 25 degrees C,
wherein each difference in dynamic surface tension between the white ink and the color ink at each bubble life time of 15 msec, 150 msec, and 1,500 msec at 25 degrees Cis 1.0 mN/m or less as measured by the maximum bubble pressure technique, and
wherein the color ink comprises black ink, cyan ink, magenta ink, and yellow ink,
wherein the black ink, the cyan ink, the magenta ink, and the yellow ink satisfy the following relationships (1) and (2): $Dsb > Dsc \geq Dsm \geq Dsy$ and $Dsb - Dsy \leq 1.0 mN / m$
where Dsb, Dsc, Dsm, and Dsy respectively represent a dynamic surface tension of the black ink, a dynamic surface tension of the cyan ink, a dynamic surface tension of the magenta ink, and a dynamic surface tension of the yellow ink at a bubble life time of 15 msec at 25 degrees C as measured by maximum bubble pressure technique.

13. The image forming apparatus (400) according to claim 12,
further comprising:
a container (410; 410p) containing a pre-processing fluid; and
an applying device (434) configured to apply the pre-processing fluid to the all or part of a recording medium before the white ink is applied thereto.

## Patentansprüche

1. Tintensatz, umfassend:
eine weiße Tinte, die ein erstes organisches Lösungsmittel, Wasser, einen ersten Farbstoff, ein erstes Harz und ein erstes Tensid umfasst, wobei das Verhältnis des ersten Tensids zur weißen Tinte 0,001 Massenprozent oder mehr beträgt und das Verhältnis des ersten organischen Lösungsmittels zur weißen Tinte von 5,0 bis 60,0 Massenprozent beträgt; und
eine Farbtinte, die ein zweites organisches Lösungsmittel, Wasser, einen zweiten Farbstoff, ein zweites Harz und ein zweites Tensid umfasst, wobei das Verhältnis des zweiten Tensids zur Farbtinte 0,001 Massenprozent oder mehr beträgt und das Verhältnis des zweiten organischen Lösungsmittels zur Farbtinte von 5,0 bis 60,0 Massenprozent beträgt,
wobei eine Differenz in der statischen Oberflächenspannung zwischen der weißen Tinte und der Farbtinte bei 25 Grad Celsius 1,0 mN/m oder weniger beträgt,
wobei jede Differenz der dynamischen Oberflächenspannung zwischen der weißen Tinte und der Farbtinte bei jeder Blasenlebensdauer von 15 ms, 150 ms und 1500 ms bei 25 Grad Celsius 1,0 mN/m oder weniger beträgt, gemessen mit der Methode des maximalen Blasendrucks,
wobei die Farbtinte schwarze Tinte, cyanfarbene Tinte, magentafarbene Tinte und gelbe Tinte umfasst,
wobei die schwarze Tinte, die cyanfarbene Tinte, magentafarbene Tinte und die gelbe Tinte die folgenden Beziehungen (1) und (2) erfüllen: $Dsb > Dsc \geq Dsm \geq Dsy$ und $Dsb - Dsy \leq 1,0 mN / m$
wobei Dsb, Dsc, Dsm und Dsy jeweils die dynamische Oberflächenspannung der schwarzen Tinte, der cyanfarbenen Tinte, der magentafarbenen Tinte und der gelben Tinte bei einer Blasenlebensdauer von 15 ms bei 25 Grad Celsius darstellen, gemessen mit der Methode des maximalen Blasendrucks.

2. Tintensatz nach Anspruch 1,
wobei jede der weißen Tinte und der Farbtinte bei 25 Grad Celsius eine statische Oberflächenspannung von 40,0 mN/m oder weniger aufweisen.

3. Tintensatz nach einem der Ansprüche 1 bis 2,
weiter umfassend ein Vorverarbeitungsfluid,
wobei das Vorverarbeitungsfluid Wasser und ein Flockungsmittel umfasst, wobei das Flockungsmittel mindestens ein Element umfasst, ausgewählt aus der Gruppe bestehend aus einem anorganischen Metallsalz, einem organischen Säuremetallsalz, einem organischen Säureammoniumsalz und einem kationischen Polymer.

4. Tintensatz nach Anspruch 3,
wobei das Vorverarbeitungsfluid weiter nichtionische Harzpartikel umfasst.

5. Tintensatz nach Anspruch 3 oder 4,
wobei das Vorverarbeitungsfluid weiter Wachspartikel umfasst.

6. Tintensatz nach Anspruch 5,
wobei die Wachspartikel Paraffinwachspartikel umfassen.

7. Bilderzeugungsverfahren, umfassend:
Aufbringen einer weißen Tinte, wobei die weiße Tinte ein erstes organisches Lösungsmittel, Wasser, ein erstes Farbmittel, ein erstes Harz und ein erstes Tensid umfasst, wobei auf dem gesamten oder einem Teil eines Aufzeichnungsmediums das Verhältnis des ersten Tensids zur weißen Tinte 0,001 Massenprozent oder mehr beträgt und das Verhältnis des ersten organischen Lösungsmittels zur weißen Tinte von 5,0 bis 60,0 Massenprozent beträgt; und
Aufbringen einer Farbtinte, wobei die Farbtinte ein zweites organisches Lösungsmittel, Wasser, ein zweites Farbmittel, ein zweites Harz und ein zweites Tensid umfasst, wobei auf dem gesamten oder einem Teil eines Aufzeichnungsmediums, auf das die weiße Tinte aufgetragen wurde, das Verhältnis des zweiten Tensids zur Farbtinte 0,001 Massenprozent oder mehr beträgt und das Verhältnis des zweiten organischen Lösungsmittels zur Farbtinte von 5,0 bis 60,0 Massenprozent beträgt,
wobei eine Differenz in der statischen Oberflächenspannung zwischen der weißen Tinte und der Farbtinte bei 25 Grad Celsius 1,0 mN/m oder weniger beträgt,
wobei eine Differenz der dynamischen Oberflächenspannung zwischen der weißen Tinte und der Farbtinte bei jeder Blasenlebensdauer von 15 ms, 150 ms und 1500 ms bei 25 Grad Celsius 1,0 mN/m oder weniger beträgt, gemessen mit der Methode maximalen Blasendrucks, und
wobei die Farbtinte schwarze Tinte, cyanfarbene Tinte, magentafarbene Tinte und gelbe Tinte umfasst,
wobei die schwarze Tinte, die cyanfarbene Tinte, magentafarbene Tinte und die gelbe Tinte die folgenden Beziehungen (1) und (2) erfüllen: $Dsb > Dsc \geq Dsm \geq Dsy$ und $Dsb - Dsy \leq 1,0 mN / m$ wobei Dsb, Dsc, Dsm und Dsy jeweils die dynamische Oberflächenspannung der schwarzen Tinte, der cyanfarbenen Tinte, der magentafarbenen Tinte und der gelben Tinte bei einer Blasenlebensdauer von 15 ms bei 25 Grad Celsius darstellen, gemessen mit der Methode des maximalen Blasendrucks.

8. Bilderzeugungsverfahren nach Anspruch 7,
weiter umfassend Aufbringen eines Vorverarbeitungsfluids auf alles oder einen Teil eines Aufzeichnungsmediums vor dem Auftragen einer weißen Tinte.

9. Bilderzeugungsverfahren nach Anspruch 7 oder 8,
wobei das Verfahren frei von Wärmeauftragen auf das Aufzeichnungsmedium zwischen dem Auftragen der weißen Tinte und dem Auftragen der Farbtinte ist.

10. Bilderzeugungsverfahren nach einem der Ansprüche 7 bis 9,
wobei eine Zeitlänge zwischen dem Auftragen einer weißen Tinte und dem Auftragen einer Farbtinte 20 Sekunden oder weniger beträgt.

11. Bilderzeugungsverfahren nach Anspruch 7 bis 10,
wobei das Aufzeichnungsmedium ein dunkel gefärbter Stoff ist.

12. Bilderzeugungseinrichtung (400), umfassend:
einen Behälter (410; 410w), der eine weiße Tinte enthält, wobei die weiße Tinte ein erstes organisches Lösungsmittel, Wasser, ein erstes Farbmittel, ein erstes Harz und ein erstes Tensid umfasst, wobei das Verhältnis des ersten Tensids zur weißen Tinte 0,001 Masseprozent oder mehr beträgt und das Verhältnis des ersten organischen Lösungsmittels zur weißen Tinte von 5,0 bis 60,0 Masseprozent beträgt;
einen Behälter (410; 410k; 410c), der eine Farbtinte enthält, wobei die Farbtinte ein zweites organisches Lösungsmittel, Wasser, einen zweiten Farbstoff, ein zweites Harz und ein zweites Tensid umfasst, wobei das Verhältnis des zweiten Tensids zur Farbtinte 0,001 Masseprozent oder mehr beträgt und das Verhältnis des zweiten organischen Lösungsmittels zur Farbtinte von 5,0 bis 60,0 Masseprozent beträgt;
eine Auftragvorrichtung (434), die so konfiguriert ist, dass sie die weißen Tinte auf alles oder einen Teil eines Aufzeichnungsmediums aufträgt; und
eine Auftragvorrichtung (434), die so konfiguriert ist, dass sie die Farbtinte auf alles oder einen Teil eines Aufzeichnungsmediums aufträgt, auf das zuvor weiße Tinte aufgetragen wurde,
wobei eine Differenz in der statischen Oberflächenspannung zwischen der weißen Tinte und der Farbtinte bei 25 Grad Celsius 1,0 mN/m oder weniger beträgt,
wobei jede Differenz der dynamischen Oberflächenspannung zwischen der weißen Tinte und der Farbtinte bei jeder Blasenlebensdauer von 15 ms, 150 ms und 1500 ms bei 25 Grad Celsius 1,0 mN/m oder weniger beträgt, gemessen mit der Methode des maximalen Blasendrucks, und
wobei die Farbtinte schwarze Tinte, cyanfarbene Tinte, magentafarbene Tinte und gelbe Tinte umfasst,
wobei die schwarze Tinte, die cyanfarbene Tinte, magentafarbene Tinte und die gelbe Tinte die folgenden Beziehungen (1) und (2) erfüllen: $Dsb > Dsc \geq Dsm \geq Dsy$ und $Dsb - Dsy \leq 1,0 mN / m$ wobei Dsb, Dsc, Dsm und Dsy jeweils die dynamische Oberflächenspannung der schwarzen Tinte, der cyanfarbenen Tinte, der magentafarbenen Tinte und der gelben Tinte bei einer Blasenlebensdauer von 15 ms bei 25 Grad Celsius darstellen, gemessen mit der Methode des maximalen Blasendrucks.

13. Bilderzeugungseinrichtung (400) nach Anspruch 12,
weiter umfassend:
einen Behälter (410; 410p), der ein Vorverarbeitungsfluid enthält; und
eine Auftragvorrichtung (434), die so konfiguriert ist, dass sie das Vorverarbeitungsfluid auf alles oder einen Teil eines Aufzeichnungsmediums aufträgt, bevor die weiße Tinte darauf aufgetragen wird.

## Revendications

1. Jeu d'encre comprenant :
une encre blanche comprenant un premier solvant organique, de l'eau, un premier matériau colorant, une première résine et un premier tensioactif, dans lequel la proportion du premier tensioactif par rapport à l'encre blanche est de 0,001 % en masse ou plus, et la proportion du premier solvant organique par rapport à l'encre blanche est de 5,0 à 60,0 % en masse ; et
une encre de couleur comprenant un second solvant organique, de l'eau, un second matériau colorant, une seconde résine et un second tensioactif, dans lequel la proportion du second tensioactif par rapport à l'encre de couleur est de 0,001 % en masse ou plus, et la proportion du second solvant organique par rapport à l'encre de couleur est de 5,0 à 60,0 % en masse,
dans lequel la différence de tension superficielle statique entre l'encre blanche et l'encre de couleur est de 1,0 mN/m ou moins à 25 degrés C,
dans lequel chaque différence de tension superficielle dynamique entre l'encre blanche et l'encre de couleur à chaque temps de vie de bulle de 15 ms, 150 ms et 1 500 ms à 25 degrés C est de 1,0 mN/m ou moins, mesurée par la technique de pression maximale de bulle,
dans lequel l'encre de couleur comprend de l'encre noire, de l'encre cyan, de l'encre magenta et de l'encre jaune,
dans lequel l'encre noire, l'encre cyan, l'encre magenta et l'encre jaune satisfont aux relations (1) et (2) suivantes : $Dsb > Dsc \geq Dsm \geq Dsy$ et $Dsb - Dsy \leq 1,0 mN / m$ où Dsb, Dsc, Dsm et Dsy représentent respectivement la tension superficielle dynamique de l'encre noire, la tension superficielle dynamique de l'encre cyan, la tension superficielle dynamique de l'encre magenta et la tension superficielle dynamique de l'encre jaune à un temps de vie de bulle de 15 ms à 25 degrés C, mesurées par la technique de pression maximale de bulle.

2. Jeu d'encre selon la revendication 1,
dans lequel chacune de l'encre blanche et de l'encre de couleur présente une tension superficielle statique de 40,0 mN/m ou moins à 25 degrés C.

3. Jeu d'encre selon l'une quelconque des revendications 1 à 2,
comprenant en outre un fluide de prétraitement,
dans lequel le fluide de prétraitement comprend de l'eau et un floculant, le floculant comprenant au moins un élément sélectionné parmi le groupe consistant en un sel métallique inorganique, un sel métallique d'acide organique, un sel d'ammonium d'acide organique et un polymère cationique.

4. Jeu d'encre selon la revendication 3,
dans lequel le fluide de prétraitement comprend en outre des particules de résine non ionique.

5. Jeu d'encre selon la revendication 3 ou 4,
dans lequel le fluide de prétraitement comprend en outre des particules de cire.

6. Jeu d'encre selon la revendication 5,
dans lequel les particules de cire comprennent des particules de cire de paraffine.

7. Procédé de formation d'image comprenant :
l'application d'une encre blanche, l'encre blanche comprenant un premier solvant organique, de l'eau, un premier matériau colorant, une première résine et un premier tensioactif, dans lequel la proportion du premier tensioactif par rapport à l'encre blanche est de 0,001 % en masse ou plus, et la proportion du premier solvant organique par rapport à l'encre blanche est de 5,0 à 60,0 % en masse, sur tout ou partie d'un support d'enregistrement ; et
l'application d'une encre de couleur, l'encre de couleur comprenant un second solvant organique, de l'eau, un second matériau colorant, une seconde résine et un second tensioactif, dans lequel la proportion du second tensioactif par rapport à l'encre de couleur est de 0,001 % en masse ou plus, et la proportion du second solvant organique par rapport à l'encre de couleur est de 5,0 à 60,0 % en masse, sur tout ou partie d'un support d'enregistrement où l'encre blanche a été appliquée,
dans lequel la différence de tension superficielle statique entre l'encre blanche et l'encre de couleur est de 1,0 mN/m ou moins à 25 degrés C,
dans lequel une différence de tension superficielle dynamique entre l'encre blanche et l'encre de couleur à chaque temps de vie de bulle de 15 ms, 150 ms et 1 500 ms à 25 degrés C est de 1,0 mN/m ou moins, mesurée par la technique de pression maximale de bulle, et
dans lequel l'encre de couleur comprend de l'encre noire, de l'encre cyan, de l'encre magenta et de l'encre jaune,
dans lequel l'encre noire, l'encre cyan, l'encre magenta et l'encre jaune satisfont aux relations (1) et (2) suivantes : $Dsb > Dsc \geq Dsm \geq Dsy$ et $Dsb - Dsy \leq 1,0 mN / m$ où Dsb, Dsc, Dsm et Dsy représentent respectivement la tension superficielle dynamique de l'encre noire, la tension superficielle dynamique de l'encre cyan, la tension superficielle dynamique de l'encre magenta et la tension superficielle dynamique de l'encre jaune à un temps de vie de bulle de 15 ms à 25 degrés C, mesurées par la technique de pression maximale de bulle.

8. Procédé de formation d'image selon la revendication 7,
comprenant en outre l'application d'un fluide de prétraitement sur tout ou partie d'un support d'enregistrement avant l'application d'une encre blanche.

9. Procédé de formation d'image selon la revendication 7 ou 8,
dans lequel le procédé ne nécessite pas l'application de chaleur au support d'enregistrement entre l'application de l'encre blanche et l'application de l'encre de couleur.

10. Procédé de formation d'image selon l'une quelconque des revendications 7 à 9,
dans lequel l'intervalle de temps entre l'application d'une encre blanche et l'application d'une encre de couleur est de 20 secondes ou moins.

11. Procédé de formation d'image selon l'une quelconque des revendications 7 à 10,
dans lequel le support d'enregistrement est un tissu de couleur foncée.

12. Appareil de formation d'image (400), comprenant :
un récipient (410 ; 410w) contenant une encre blanche, l'encre blanche comprenant un premier solvant organique, de l'eau, un premier matériau colorant, une première résine et un premier tensioactif, dans lequel la proportion du premier tensioactif par rapport à l'encre blanche est de 0,001 % en masse ou plus, et la proportion du premier solvant organique par rapport à l'encre blanche est de 5,0 à 60,0 % en masse ;
un récipient (410 ; 410k ; 410c) contenant une encre de couleur, l'encre de couleur comprenant un second solvant organique, de l'eau, un second matériau colorant, une seconde résine et un second tensioactif, dans lequel la proportion du second tensioactif par rapport à l'encre de couleur est de 0,001 % en masse ou plus, et la proportion du second solvant organique par rapport à l'encre de couleur est de 5,0 à 60,0 % en masse ;
un dispositif d'application (434) configuré pour appliquer l'encre blanche sur tout ou partie d'un support d'enregistrement ; et
un dispositif d'application (434) configuré pour appliquer l'encre de couleur sur tout ou partie d'un support d'enregistrement où l'encre blanche a été appliquée,
dans lequel la différence de tension superficielle statique entre l'encre blanche et l'encre de couleur est de 1,0 mN/m ou moins à 25 degrés C,
dans lequel chaque différence de tension superficielle dynamique entre l'encre blanche et l'encre de couleur à chaque temps de vie de bulle de 15 ms, 150 ms et 1 500 ms à 25 degrés C est de 1,0 mN/m ou moins, mesurée par la technique de pression maximale de bulle, et
dans lequel l'encre de couleur comprend de l'encre noire, de l'encre cyan, de l'encre magenta et de l'encre jaune,
dans lequel l'encre noire, l'encre cyan, l'encre magenta et l'encre jaune satisfont aux relations (1) et (2) suivantes : $Dsb > Dsc \geq Dsm \geq Dsy$ et $Dsb - Dsy \leq 1 , 0 mN / m$ où Dsb, Dsc, Dsm et Dsy représentent respectivement la tension superficielle dynamique de l'encre noire, la tension superficielle dynamique de l'encre cyan, la tension superficielle dynamique de l'encre magenta et la tension superficielle dynamique de l'encre jaune à un temps de vie de bulle de 15 ms à 25 degrés C, mesurées par la technique de pression maximale de bulle.

13. Appareil de formation d'image (400) selon la revendication 12,
comprenant en outre :
un récipient (410 ; 410p) contenant un fluide de prétraitement ; et
un dispositif d'application (434) configuré pour appliquer le fluide de prétraitement sur tout ou partie d'un support d'enregistrement avant que l'encre blanche ne soit appliquée sur celui-ci.
